# EUROPEAN PATENT SPECIFICATION

(11) **EP 3 921 813 B1**
(45) Date of publication and mention of the grant of the patent: **21.05.2025**
(21) Application number: 20753166.6
(22) Date of filing: 07.02.2020
(51) Int. Cl.: G07C 9/00, G07C 9/25, G07C 9/26, G06F 21/32, H04W 12/00, H04W 4/02, H04W 4/80

(54) **METHOD FOR CONTROLLING AN ACCESS DEVICE**
VERFAHREN ZUR STEUERUNG EINER ZUGANGSVORRICHTUNG
PROCÉDÉ DE COMMANDE D'UN DISPOSITIF D'ACCÈS

(30) Priority: 08.02.2019 FI 20195092
(43) Date of publication of application: 15.12.2021
(73) Proprietor: Flow Technologies Oy, 00180 Helsinki (FI)
(72) Inventor: KERONEN, Seppo, 00180 Helsinki (FI)
(74) Representative: Primrose Oy
(86) International application number: PCT/FI2020/050074
(87) International publication number: WO 2020/161395

(56) References cited:
- EP-A1- 3 089 063
- WO-A1-2017/075063
- WO-A1-2018/160254
- US-A1- 2016 300 050
- US-A1- 2018 211 022

## Description

### FIELD OF THE INVENTION

The present invention relates to a method for controlling an access device and more particularly to a method according to a preamble of claim 1.

### BACKGROUND OF THE INVENTION

Controlling access to a facility by utilizing biometric information of a user is commonly known. The biometric information may comprise for example fingerprint, voice, facial characteristics or other physical attributes of the user. Biometric authentication is based on reading one or more biometric attributes of the user and comparing the read biometric attribute to reference biometric attribute stored in an access control system. Each reference biometric attribute is associated with a user identifier in the access control system. The reference biometric attribute is read with a biometric sensor from the user and stored to the access control system. Further, the user is authenticated when the reference biometric attribute is read and stored to the access control system.

Prior art solutions are disclosed for example in patent documents WO 2017/075063 A1, EP3089063 A1 and US 2018/211022 A1.

One of the disadvantages associated with the prior art is that adding a new user to the access control system requires authentication of the new user in person or by providing official identification documents of the new user. This makes adding the new user slow of difficult process, and further does not enable adding the new user remotely without the user. Furthermore, storing the reference biometric attribute to the access control system subjects the original biometric attribute of the user to information breaches or thefts.

### BRIEF DESCRIPTION OF THE INVENTION

An object of the present invention is to provide a method for controlling an access device so as to solve or at least alleviate the prior art disadvantages. The objects of the invention are achieved by a method which is characterized by what is stated in the independent claim 1.

The preferred embodiments of the invention are disclosed in the dependent claims.

The invention is based on the idea of providing a method for controlling an access device. The access device connectable with a mobile user device for data transfer between the access device and the mobile user device. The method comprises a verification step for verifying a user. The verification step comprises receiving, in the access device, a biometric input of the user and detecting, by the access device, the mobile user device in proximity of the access device. The verification step further comprises receiving, in the mobile user device, the biometric input from the access device when the mobile user device is detected by the access device and maintaining, in the mobile user device, one or more digital biometric templates, the one or more digital biometric templates being generated from biometric information of the user. The verification then comprises determining, by the mobile user device, verification of the user based on the biometric input received in the mobile user device and the one or more digital biometric templates.

The access device may be an electronic lock, user panel of a vending machine, or any device controlling access to a facility, which may be a hardware facility such as door, locker or the like, or a software facility, such as a user interface of a device such as computer, or any other hardware or software facility.

According to the above mentioned, the verification step requires that the mobile user device is in the proximity of the access device. Further, the digital biometric template is stored in the mobile user device. The digital biometric template serves as the original reference biometric attribute. Thus, there is no need for providing the original reference biometric attribute to any remote server or database and accordingly there is no need to transmit the original reference biometric attribute over a communication network. Further, digital biometric template may also be generated by the user with the mobile user device and thus it is under control of the user.

Receiving the biometric input of the user in the access device may comprise capturing the biometric input of the user by the access device, or capturing the biometric input of the user by a biometric sensor provided in connection with the access device.

Alternatively, receiving of the biometric input of the user may comprise capturing the biometric input by the access device, and generating a digital biometric input from the biometric input of the user by the access device. The digital biometric input is received, in the mobile user device, as the biometric input of the user.

Further alternatively, receiving of the biometric input of the user may comprise capturing the biometric input by a biometric sensor provided in connection with the access device, and generating a digital biometric input from the biometric input of the user by the access device. The digital biometric input is received, in the mobile user device, as the biometric input of the user.

Accordingly, the biometric input of the user may be captured with the access device or with the biometric sensor provided in connection with the access device. Therefore, a biometric attribute of the user may be read at the site of the access device and then transmitted to the mobile user device in the proximity of the access device.

Detecting the mobile user device in proximity of the access device by the access device may comprise establishing a communication connection between the access device and the mobile user device by the access device or by the access device and the mobile user device.

Alternatively, detecting the mobile user device in proximity of the access device by the access device may comprise detecting, by the access device, the mobile user device in a personal area network in the proximity of the access device and establishing, by the access device, or by the mobile user device, or by the access device and the mobile user device, a communication connection between the access device and the mobile user device in the personal area network.

Further alternatively, detecting the mobile user device in proximity of the access device by the access device may comprise providing, by a personal area network system, a personal area network in the proximity of the access device, the access device may be connected to the personal area network. The detecting may further comprise detecting, by the access device, the mobile user device in the personal area network, the mobile user device being connected to the personal area network provided by the personal area network system, and establishing, by the personal area network system, a communication connection between the access device and the mobile user device.

Alternatively, detecting the mobile user device in proximity of the access device by the access device may comprise providing, by the access device, a personal area network in the proximity of the access device, and detecting, by the access device, the mobile user device in the personal area network, the mobile user device being connected to the personal area network provided by the access device. The detecting may also comprise establishing, by the access device or by the access device and the mobile user device, a communication connection between the access device and the mobile user device.

According to the above mentioned, the communication connection is provided in the proximity of the access device directly between the access device and the mobile user device or via the personal area network established in the proximity of the access device. Therefore, for enabling access the user device must be in the proximity of the access device. Thus, remote access cannot be granted internet or any other local area or wide area network. Access may be only granted when the mobile user device and the user are in close proximity of the access device.

The method may comprise establishing a wireless personal area communication connection between the access device and the mobile user device in the personal area network by the access device, or by the mobile user device, or by the access device and the mobile user device. The wireless personal area communication connection may be establishing by the access device, or by the mobile user device, or by the access device and the mobile user device by providing a Bluetooth, near field, Z-wave, infrared, communication connection between the access device and the mobile user device in the personal area network. Thus, the wireless personal area communication connection is established directly between the access device and the mobile user device.

Alternatively, the method may comprise providing a wireless personal area network by a personal area network system. The personal area network system may be configured to provide a Wi-Fi or Zigbee network. Accordingly, the access device and the mobile user device may be connected to the wireless personal area network for providing the communication connection between them. The wireless personal area network is provided in proximity of the access device.

The method comprises an authorization step for authorizing the user. The authorization step comprises receiving an authorization request for the user in an access service unit of an access server system. The authorization request comprises a user identifier. The user identifier corresponds the mobile user device or the user of the mobile user device. The authorization step further comprises determining, by the access service unit of the access server system, authorization of the user based on the user identifier.

The authorization step comprises maintaining, in the access service unit of the access server system, one or more authorized user identifiers, and receiving, in the access service unit of the access server system, an authorization request for the user. The authorization request comprises a user identifier corresponding the mobile user device or the user of the mobile user device. The authentication step may further comprise determining, by the access server system, authorization of the user by comparing the user identifier and the one or more authorized user identifiers.

In addition to the verification of the user based on the biometric input the user may be authorized for determining whether the user is authorized to be granted with access for the access device. This authorization is carried out in the access service unit based on the user identifier received from the mobile user device. Accordingly, the user must be present in the proximity of the access device, the user must be verified with the biometric verification step and further the user or the mobile user device must be checked for authorization for access.

Accordingly, the authorization step is carried out after the verification step. Thus, the authorization is carried only after successful verification step of the user when the user is verificated.

Accordingly, the authorization step is carried out if the biometric input received in the mobile user device matches with the one or more digital biometric templates. Therefore, the successful verification of the user initiates the authorization step. Further, when the verification is unsuccessful, the authorization step is unnecessary and access is already prevented.

Furthermore, the authorization step further comprises receiving, in a user service unit of the access server system, from the access device an access device identifier corresponding the access device, and determining, by the user service unit of the access server system, authorization of the access device based on the access device identifier.

Further, the authorization step comprises maintaining, in the user service unit of the access server system, one or more authorized access device identifiers, receiving, in the user service unit of the access server system, from the access device an access device identifier corresponding the access device, and determining, by the user service unit of the access server system, authorization of the access device by comparing the access device identifier with the one or more authorized access device identifiers.

According to the above mentioned, the authorization step may also comprise determining whether the access device is registered for the user for allowing access. Therefore, it may be provided that the authorization based on the user identifier checks if the user is a registered user for the access control system or method and the authorization based on the access device identifier checks of the access device is registered for the user allowing access for that particular access device.

The method comprises generating, by the mobile user device, a verification access input based on determining the verification in the verification step, and receiving, in the access device, the verification access input from the mobile user device.

According to the above mentioned, the access input for admitting access or denying access by the access device is based on the user verification and the user authorization. Therefore, the level of security may be changed or chosen according to requirements or needs.

The method of the invention comprises, based on determining the verification and authorization steps:
if the biometric input received in the mobile user device matches with the one or more digital biometric templates, and the user identifier and the access device identifier match, respectively, the one or more authorized user identifiers, or the one or more authorized user identifiers, generating, by the mobile user device, an admitted access input for allowing access, or
if the biometric input received in the mobile user device differs with the one or more digital biometric templates, generating, by the mobile user device, a denied access input for preventing access.

The admitted access input or the denied access input is received in the access device. The access device allows or prevents access based on the admitted access input or the denied access input.

The method may also comprise providing, in the access device or in the access service unit of the authorization server system, a public user device encryption key, maintaining, in the user device or in the in the user service unit of the authorization server system, an encrypted private user device encryption key, encrypting, by the access device or by the access service unit of the authorization server system, the biometric input of the user with the public user device encryption key, receiving, in the mobile user device, the encrypted biometric input and decrypting, in the mobile user device, the encrypted biometric input by utilizing the encrypted private user device encryption key.

Accordingly, the biometric input from the access device may be encrypted for increasing security.

The method may also comprises providing, in the user device, a public access device encryption key, maintaining, in the access device, an encrypted private access device encryption key, encrypting, by the user device, the access input or the verification access input, or the admitted access input, or the denied access input with the public access device encryption key, receiving, in the access device, the encrypted access input or the verification access input, or the admitted access input, or the denied access input, and decrypting, in the access device, the encrypted access input or the verification access input, or the admitted access input, or the denied access input by utilizing the encrypted private access device encryption key.

Accordingly, the access input or the verification access input, or the admitted access input, or the denied access input from the mobile user device may be encrypted for increasing security.

The present invention provides method in which the user may be verified locally at the access device by utilizing biometric attribute and the mobile user device. Therefore, remotely granted access may be prevented and further there is no need to store the original reference biometric attribute of the user to a remote location for subjecting it to information breach or theft. In addition, the user may generate the original reference biometric attribute or digital biometric template by itself by utilizing the mobile user device. The authorization of the user and/or the access device for the user may be carried out with the access server system and it may be based on the user identifier and/or the access device identifier. Therefore, the new user may be added to the access control system remotely as there is no need physical authentication for the original reference biometric attribute.

### BRIEF DESCRIPTION OF THE DRAWINGS

The invention is described in detail by means of specific embodiments with reference to the enclosed drawings, in which
Figure 1 shows schematically one embodiment of an access control system;
Figure 2 shows schematically another embodiment of an access control system;
Figure 3 shows schematically a further embodiment of an access control system;
Figure 4 shows schematically still another embodiment of an access control system;
Figures 5 and 6 show schematically flow charts of one embodiment of a method;
Figure 7 shows schematically an access control system according method of figures 5 and 6;
Figures 8 and 9 show schematically flow charts of another embodiment of a method;
Figure 10 shows schematically an access control system according method of figures 8 and 9;
Figures 11 and 12 show schematically flow charts of still another embodiment of a method;
Figure 13 shows schematically an access control system according method of figures 11 and 12;
Figure 14 shows schematically one embodiment of the method and system according to the present invention.

### DETAILED DESCRIPTION OF THE INVENTION

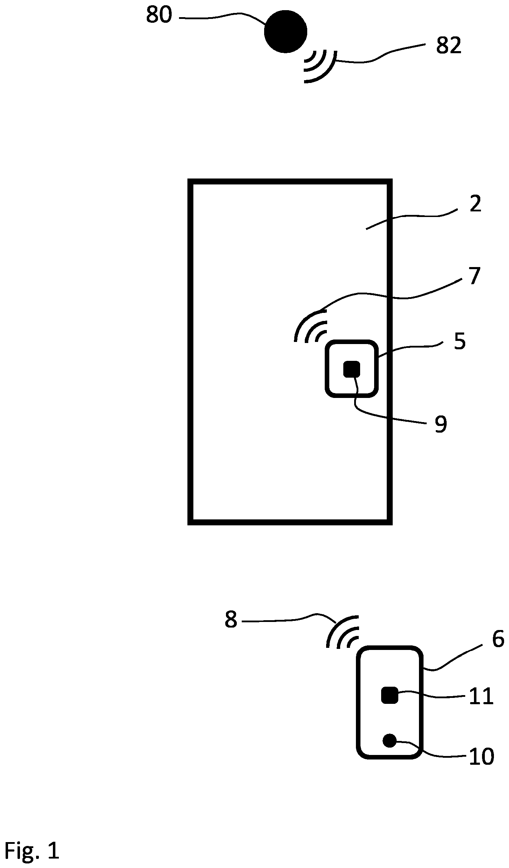

Figure 1 shows one embodiment of an access control system for controlling access to a facility 2. The facility may be door, as in figure 1, a locker, a vending machine or an electronic device or any other physical facility having a restricted access. Furthermore, the facility may also be software facility such as software application.

The access system comprises an access device 5 provided in connection with the facility 2. The access device 5 may be lock, electronic lock, a user terminal, a computer, or any access control device in connection with the facility.

The access device 5 comprises a biometric sensor 9 configured to capture a biometric input of a user. The biometric sensor 9 may be provided to the access device 5 or in connection with the access device 5, for example in close proximity of the access device 5. The biometric sensor 9 provided in close proximity and in connection with the access device 5 is connected to the access device via wireless communication connection, but preferably by a wired connection. For example, in one embodiment the biometric sensor may be arranged to a wall beside a door and the access device is arranged to the door. The biometric sensor 9 may be fingerprint reader for capturing a fingerprint of the user, or a camera for capturing a digital image of the user, or iris recognition sensor for providing a digital model of the iris of the user, or a voice recognition sensor for capturing voice input of the user. It should be noted that the present invention is not restricted to any particular biometric sensor 9, but it may be any biometric sensor capable of capturing biometric attribute of the user.

The access device 5 further comprises a first wireless communication unit 7 with a first personal area network module configured to transfer the biometric input from the access device 5 to the mobile user device in proximity of the access device 5. The first wireless communication unit 7 enables establishing a personal area network connection directly to another device in close proximity of the access device, or to a personal area network system proving a wireless personal area network in the proximity of the access device.

The access system further comprises one or more mobile user devices 6. The mobile user device 6 may be laptop, touch screen computer, mobile phone, smart-phone, personal digital assistant (PDA), e-reading device, tablet, wearable computer or the like mobile user devices designed to be carried with the user. The present invention is not restricted to any particular mobile user device 6.

The mobile user device 6 may comprise a security unit. The security unit comprising a one or more digital biometric templates stored in the security unit. The one or more digital biometric templates being generated from biometric information of the user. The security unit is configured to verify the user by comparing a biometric input and the one or more digital biometric templates and to generate verification access input.

The security unit may be separate hardware chip 11 in the mobile user device 6. The security unit may be operable to transform the original reference biometric attribute to a mathematical representation stored in the security unit. The security unit may operable to only compare a biometric input and the original reference biometric attribute and out a yes/no output. The yes/no output forming a verification of the user or the verification access input for the access device 5.

The mobile user device 6 further comprises a second wireless communication unit 8 with a second personal area network module configured to transfer the verification access input from the mobile user device 6 to the access devices 5 in the proximity of the mobile user device 6. The second wireless communication unit 9 enables establishing a personal area network connection directly to another device, the access device 5, in close proximity of the access device 5, or to a personal area network system proving a wireless personal area network in the proximity of the access device

The mobile user device 6 preferably comprises also comprises biometric sensor 10 configured to capture a biometric input of a user. The mobile user device 6 may be configured to provide training for the biometric input of the user such that the biometric input captured by the biometric sensor 10 of the mobile user device 6 is stored to the security unit 11 as the original reference biometric attribute or the digital biometric template to which the verification of the user is based on. The biometric sensor 11 of the mobile user device is provided to the mobile user device 6 and it may be fingerprint reader for capturing a fingerprint of the user, or a camera for capturing a digital image of the user, or iris recognition sensor for providing a digital model of the iris of the user, or a voice recognition sensor for capturing voice input of the user. It should be noted that the present invention is not restricted to any particular biometric sensor 10, but it may be any biometric sensor capable of capturing biometric attribute of the user.

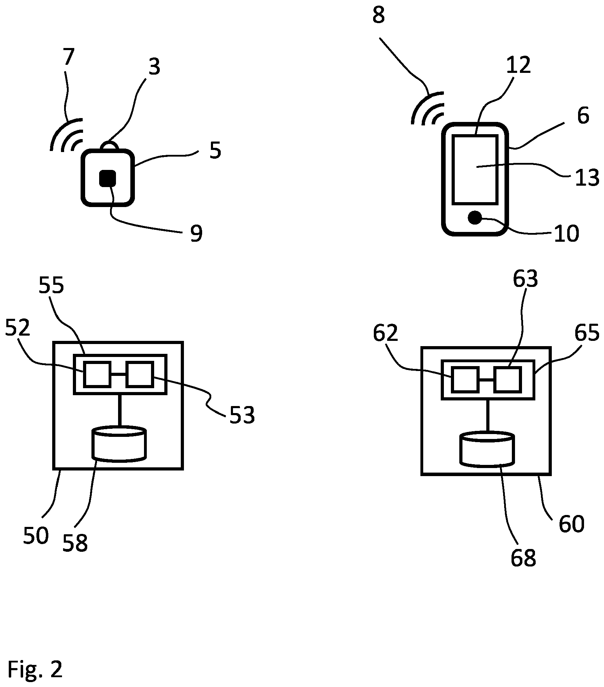

The mobile user device 6 may also comprise an access control application 12 providing instructions executed by a processor of the mobile user device 6, as shown in figure 2. The access control application may be stored to the memory of the mobile user device 6, or it may be web or browser application running in an access control server system. The access control application 12 may have user interface 13 provided on a display of the mobile user device 6 for allowing operation of the access control application by the user. Alternatively, the access control application 12 may be executed as a background application in the mobile user device 6 without need for user input(s).

Personal area network, or wireless personal area network, means interconnection of information technology devices within the range of an individual person, typically within a range of 10 meters, or within a range of 1 centimetre to 100 meters, or from 1 centimetre to about 10 meters.

In a preferred embodiment, the personal area network means a network in which information is transferred between devices that are nearby instead of sending that same data through a common network. Examples of these kind of personal area networks comprise a Bluetooth, near field, Z-wave or infrared communication networks or connections. Accordingly, in one embodiment the first and second wireless communication units 7, 8 or the first and second personal area network module are device-to-device wireless communication modules, such as Bluetooth, near field, Z-wave or infrared communication modules.

However, in some embodiments the personal area network may also include local area networks having restricted operating range, such a as Wi-Fi or Zigbee. In this embodiment, the first and second wireless communication units 7, 8 or the first and second personal area network module are device-to-network wireless communication modules, such as Wi-Fi or Zigbee modules.

It should be noted that the second wireless communication unit 8 of the mobile user device 6 may also comprise, in addition to persona area network module, a GSM (Global System for Mobile Communications), UMTS (Universal Mobile Telecommunications System), WLAN (Wireless Local Area networks), RF (Radio Frequency) or BRAN (Broadband Radio Access Networks) network module(s) as a fourth network module for communication with external services, devices or servers. Similarly, the second wireless communication unit 8 of the mobile user device 6 may comprise, in addition to persona area network module, similar networks module(s), as the third network module.

In one embodiment, the first wireless communication unit 7 and the second wireless communication unit 8 are arranged to establish a personal area network or personal area network connection between the access device 5 and the mobile user device 6 in the proximity of the access device 5. Accordingly, in this embodiment, the personal area network connection is established as device-to-device connection between the access device 5 and the mobile user device in the proximity of the access device 5 or in operating range of the personal area network between the access device 5 and the mobile user device 6.

Based on the above mentioned, the first wireless communication unit 7 and the second wireless communication unit 8 are arranged to establish a Bluetooth, near field, Z-wave or infrared communication connection between the access device 5 and the mobile user device 6 in the proximity of the access device 5.

Accordingly, the access device 5 may be configured to send the biometric input captured by the biometric sensor 9 directly to the mobile user device 6 via the personal area network connection established between the access device 5 and the mobile user device 6 with the first and second wireless communication unit, or the first and second personal area network module. Therefore, the mobile user device 6 may be configured to receive the biometric input captured by the biometric sensor 9 directly from the access device 5 via the personal area network connection established between the access device 5 and the mobile user device 6 with the first and second wireless communication unit, or the first and second personal area network module.

Similarly, the mobile user device 6 may be configured to send an access input, generated by the mobile user device 6 based on the biometric input received from the access device 5, directly to the access device 5 via the personal area network connection established between the access device 5 and the mobile user device 6 with the first and second wireless communication unit, or the first and second personal area network module. Therefore, the access device 5 may be configured to receive the access input, generated by the mobile user device 6 based on the biometric input received from the access device 5, directly from the mobile user device 6 via the personal area network connection established between the access device 5 and the mobile user device 6 with the first and second wireless communication unit, or the first and second personal area network module.

In an alternatively embodiment, the access control system may comprise a wireless personal area network system 80 arranged to establish a personal area network 82 in proximity of the access device 5. The first wireless communication unit 7 and the second wireless communication unit 8 are arranged to connect to the personal area network 82. Accordingly, the first wireless communication unit 7 and the second wireless communication unit 8 may comprise, respectively, a wireless personal network module arranged to connect to the wireless personal area network system 80.

In one embodiment, the access system may comprise a Wi-Fi or Zigbee, or the like, network system 80 arranged to establish a personal area network in proximity of the access device 5. The first wireless communication unit 7 and the second wireless communication unit 8 are arranged to connect to the Wi-Fi or Zigbee personal area network 80. Therefore, the first wireless communication unit 7 and the second wireless communication unit 8 may comprise, respectively, a Wi-Fi or Zigbee, or the like network module arranged to connect to the wireless personal area network system 80.

The access system may also comprise an access server system. The access server system is operable to determining authorization of the user or authorization of the mobile user device 6 for the access device 5.

In the embodiment of figure 2, access control system comprises an access service unit 50 and/or access service server 55. The access service unit 50 may comprise the access service server 55 and an access database 58 provided to the access service server 55 or externally to the access service server 55 and connected to the access service server 55 directly or via a communications network. The access service server 55 may comprise an access memory module 53 and an access processing module 52 configured to execute instructions stored in the access memory module 52.

The access service unit 50 may comprise one or more authorized user identifiers stored therein. The one or more authorized user identifiers may be authorized for the whole access control system or to one or more access devices 5 in the access control system. The access service unit 50 may further be operable to determining authorization of the user for the access device 5 or the access control system by comparing a user identifier of the user or the mobile user device 6 with the one or more authorize user identifiers. The user identifier may correspond the user or the mobile user device 6 of the user. Accordingly, the user identifier may also be mobile user device identifier.

The access server system 70 may further be operable to determining authorization of the access device 5 for the user or the mobile user device 6.

In the embodiment of figure 2, access control system comprises a user service unit 60 and/or user service server 65. The user service unit 60 may comprise the user service server 65 and a user database 68 provided to the user service server 65 or externally to the user service server 65 and connected to the user service server 65 directly or via a communications network. The user service server 65 may comprise a user memory module 63 and a user processing module 62 configured to execute instructions stored in the user memory module 62.

The user service unit 60 may comprise one or more authorized access device identifiers associated to one or more user identifiers stored therein. The user service unit 60 may further be operable to determining authorization of the access device 5 for the user or the mobile user device 6 by comparing an access device identifier of the access device 5 with the one or more authorized access device identifiers associated with the one or more user identifiers. The access device identifier corresponding the access device 5 and the user identifier corresponding the user or the mobile user device 6 of the user.

The processing modules 52, 62 may comprise one or more processing units or central processing units (CPU) or the like computing units. The present invention is not restricted to any kind of processing unit or any number of processing units. The memory modules 53, 63 may comprise non-transitory computer-readable storage medium or a computer-readable storage device. In some embodiments, the memory modules 53, 63 may comprise a temporary memory, meaning that a primary purpose of memory modules 53, 63 may not be long-term storage. The memory modules 53, 63 may also refer to a volatile memory, meaning that the memory modules 53, 63 do not maintain stored contents when the memory modules 53, 63 are not receiving power. Examples of volatile memories include random access memories (RAM), dynamic random access memories (DRAM), static random access memories (SRAM), and other forms of volatile memories known in the art. In some examples, the memory modules 53, 63 are used to store program instructions for execution by the processing modules 52, 62, for example the food item recommendation server application. The memory modules 53, 63, in one embodiment, may be used by software (e.g., an operating system) or applications, such as a software, firmware, or middleware. The memory modules 53, 63 may comprise for example operating system or software application, the message application, comprising at least part of the instructions for executing the method of the present invention.

It should be noted, that the databases 58, 68 may also configured to comprise software application, the food item recommendation server application, comprising at least part of the instructions for executing the method of the present invention.

The databases 58, 68 may maintain information of user accounts of a plurality of users and/or authorized user identifiers / authorized access device identifiers uploaded or stored to the access server system or the access service unit 50 or the user service unit 60 via said user accounts or mobile user devices 6 or user interfaces 13 or user applications 12 or by administrator device(s) (not shown). The databases 58, 68 may comprise one or more storage devices. The storage devices may also include one or more transitory or non-transitory computer-readable storage media and/or computer-readable storage devices. In some embodiments, storage devices may be configured to store greater amounts of information than the memory modules 53, 63. Storage devices may further be configured for long-term storage of information. In some examples, the storage devices comprise non-volatile storage elements. Examples of such non-volatile storage elements include magnetic hard discs, optical discs, solid-state discs, flash memories, forms of electrically programmable memories (EPROMs) or electrically erasable and programmable memories (EEPROMs), and other forms of non-volatile memories known in the art. In one embodiment, the storage device may comprise databases 58, 68 and the memory modules 53, 63 comprises instructions and access control application for executing the authorization according to the present invention utilizing the processing modules 53, 63. However, it should be noted that the storage devices may also be omitted and the access server system may comprise only the memory modules 53, 63. Alternatively, the memory modules 53, 63 could be omitted and the access server system could comprise only one or more storage devices. Therefore, the terms memory module 53, 63 and database 58, 68 could be interchangeable in embodiments which they both are not present. The databases 58, 68 may be operable with other components and data of the access server system by utilizing instructions stored in the memory modules 53, 63 and executed by the processing modules 52, 62 over the communications network.

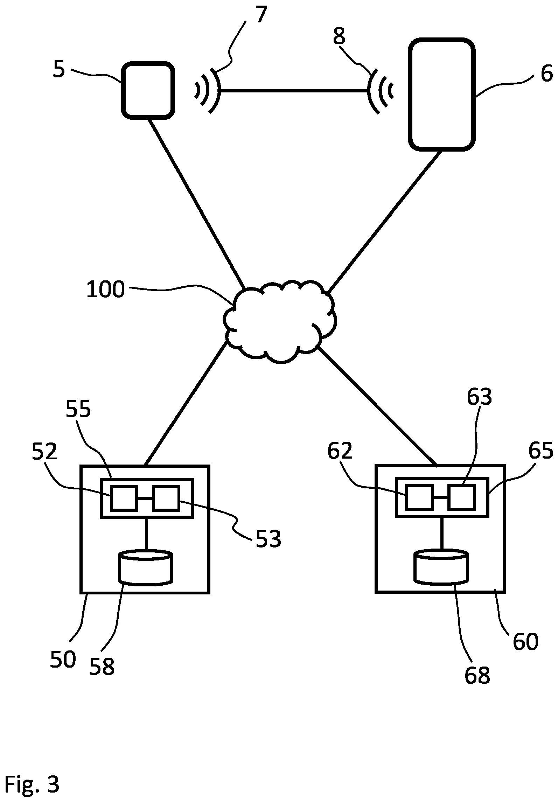

Figure 3 shows schematically one embodiment in which the access device 5 and the mobile user device 6 may be connected to the access server system or the access service unit 50 and/or the user service unit 60 via a communications network 100. In this embodiment, the access service unit 50 and the user service unit 60 are provided as separate service units or separate servers which may be connected to each other via the communications network 100. However, the separate access service unit 50 and the separate user service unit 60 may together provide the access server system.

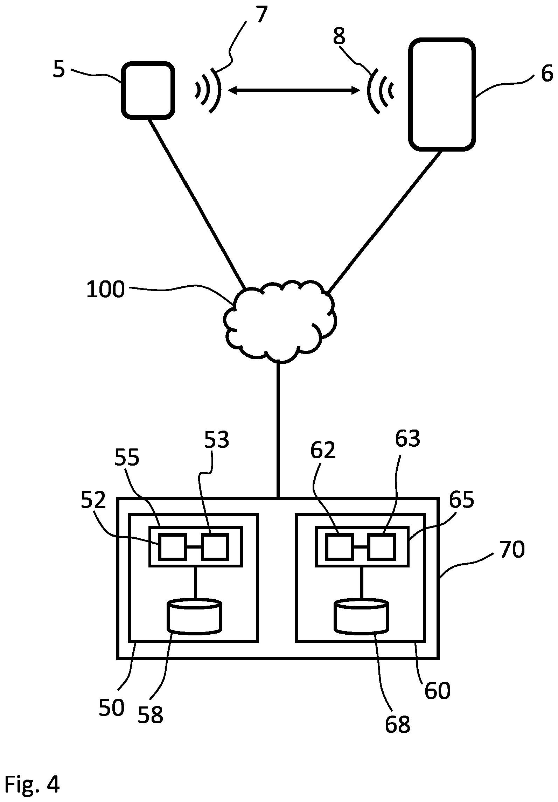

Figure 4 shows schematically an alternative embodiment in which the access device 5 and the mobile user device 6 may be connected to an access server system 70 via the communications network 100. In this embodiment, the access service unit 50 and the user service unit 60 are provided to a same access server or a same access server system 70 which may be connected to via the communications network 100 to the access device 5 and the mobile user device 6.

Further, it should be noted that in some embodiments the access service unit 50 and the user service unit 60 of figure 4 may have common processing module 52, 62 and/or common memory module 53, 63. Also in some embodiments, the access service unit 50 and the user service unit 60 of figure 4 may have common database 58, 68.

The access server system 70, the access service unit/server 50 and/or the user service unit/server 60 may be implemented as a conventional computer server(s). The access server system 70, the access service unit/server 50 and/or the user service unit/server 60 may also be implemented as distributed server system comprising two or more separate servers or as a computing cloud comprising one or more cloud servers. In some embodiments, the access server system 70, the access service unit/server 50 and/or the user service unit/server 60 may be a fully cloud-based server8s) or server system. Further, it should be appreciated that the location of the access server system 70, the access service unit/server 50 and/or the user service unit/server 60 is irrelevant to the invention. The access server system 70, the access service unit/server 50 and/or the user service unit/server 60 may be operated and maintained using one or more other network devices in the system or using a terminal device (not shown) via the communications network 100.

The communications network 100 may comprise one or more wireless networks, wherein a wireless network may be based on any mobile system, such as GSM, GPRS, LTE, 4G, 5G and beyond, and a wireless local area network, such as Wi-Fi. Furthermore, the communications network 100 may comprise one or more fixed networks or the Internet.

According to the above mentioned, the access device 5 and the mobile user device 6 may comprise the first and second wireless communication unit 7, 9 with the first and second personal area network modules for providing direct device-to-device communication connection between the access device 5 and the mobile user device 6. Furthermore, the access device 5 and the mobile user device 6 may comprise the first and second wireless communication unit 7, 9 with the third and fourth network modules for providing device-to-network communication connection between the access device 5 and communications network or the access server system 70, 50, 60 and/or between the mobile user device 6 and communications network or the access server system 70, 50, 60.

Furthermore, it should be noted that the access service unit 50 and/or the user service unit 60 may be omitted. Therefore, the authorized user identifiers may be stored to the access device 5 for authorizing the user or the mobile user device 6 of the user. Similarly, or alternatively, the authorized access device identifiers associated to the user or the mobile user device 6 may be stored to the mobile user device 6 for authorizing access device 6 for the user or the mobile user device 6 of the user.

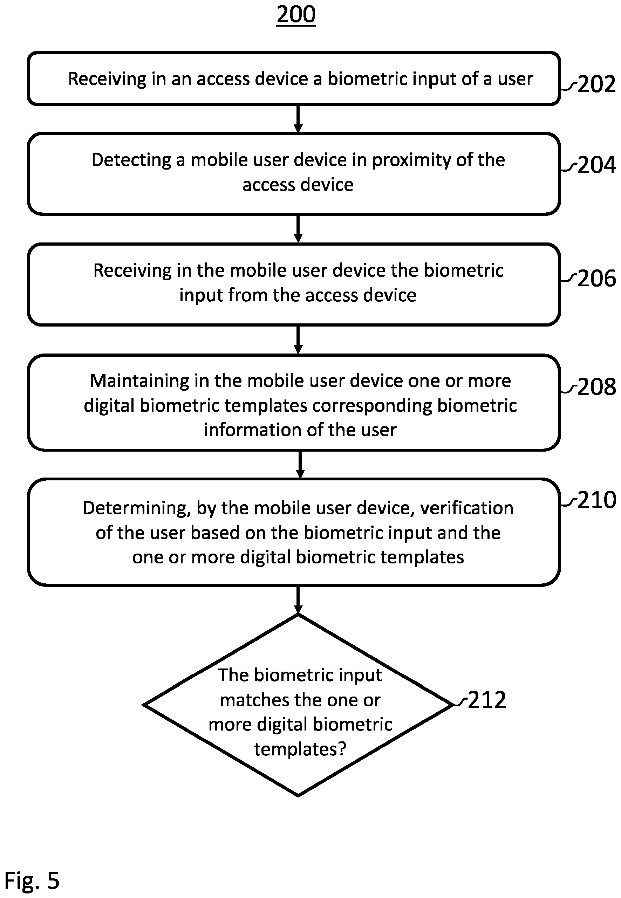

Figure 5 shows one embodiment of a method for controlling the access device 5.

The method comprises a verification step 200 for verifying the user. Verifying the user means that the identity of the user trying to access is verified. The verification step 200 comprises step 202 receiving, in the access device 5, a biometric input of the user. The biometric input is received from or via the biometric sensor 9 provided to or in connection with the access device 5. The biometric input may be captured with the biometric sensor 9 for example by scanning fingerprint of the user, taking an image of the user or recording a voice of the user.

In one embodiment, the step 202 of receiving, in the access device 5, the biometric input of the user comprises capturing, by the access device 5 or by the biometric sensor 9 of the access device 5, the biometric input of the user.

In another embodiment, the step 202 may comprise capturing, by the access device 5 or by the biometric sensor 9 of the access device 5, the biometric input of the user, and generating, by the access device 5, a digital biometric input from the biometric input of the user. The digital biometric input may be received, in the mobile user device 6, as the biometric input of the user. Accordingly, for security reasons the access device 5 or the biometric sensor 9 of the access device may generate a digital representation of the biometric input of the user. The digital biometric input may comprise mathematical representation of the biometric input generated by instructions stored in the access device 5 or the biometric sensor 9 of the access device 5.

The verification step 200 further comprises in step 204 detecting, by the access device 5, the mobile user device 6 in proximity of the access device 5. Accordingly, a communication connection is established between the access device 5 and the mobile user device 6. The communication connection may be provided as personal area communication connection in proximity of the access 5 or established as personal area network in the proximity of the access device 5. The personal area communication connection may be established by or between the first wireless communication unit 7 or with the first personal area network module of the access device 5 and the second wireless communication unit 8 or the second personal area network module of the mobile user device 6.

Utilizing the personal area communication connection or the personal area network allows the communication connection between the access device 5 and the mobile user device to be established only in the proximity of the access device 5, as the operating range of the personal area connection or network is only up to 10 meters or between 1 centimetre and 10 metres, or between 1 centimetre and about 100 meters. Accordingly, this provides a requirement that the mobile user device 6 must be held or carried by the user in be in close proximity of the access device when the biometric input is captured and received in the access device 5.

The step 204 may further comprise establishing, by the access device 5 or by the access device 5 and the mobile user device 6, a communication connection between the access device 5 and the mobile user device 6. Accordingly, the communication connection may be preferably established directly between the access device 5 and the mobile user device 6 as a device-to-device communication connection. This may be provided with the first and second wireless communication unit 7, 8, or with the first and second personal area network module, respectively. The communication connection may be established by the access device 5 or by the mobile user device 6 or by both the access device 5 and the mobile user device 6, for example by pairing.

In an alternative embodiment, the step 204 may comprise detecting, by the access device 5, the mobile user device 6 in a personal area network in the proximity of the access device 5, and establishing, by the access device 5, or by the mobile user device 6, or by the access device 5 and the mobile user device 6, a communication connection between the access device 5 and the mobile user device 6 in the personal area network. Also in this case, the communication connection may be established directly between the access device 5 and the mobile user device 6 as a device-to-device communication connection. This may be provided with the first and second wireless communication unit 7, 8, or with the first and second personal area network module, respectively. The communication connection may be established by the access device 5 or by the mobile user device 6 or by both the access device 5 and the mobile user device 6, for example by pairing.

In an alternative embodiment, the step 204 may comprise providing, by the personal area network system 80, the personal area network in the proximity of the access device 5. The access device 5 may be connected to the personal area network system 80 or the personal area network provided by the personal area network system 80. In this embodiment, the access device 5 and the mobile user device 6 may be both connected to the personal area network provided by the personal area network system 80. Accordingly, the access device 5 and the mobile user device 6 may be connected to each other via the personal area network provided by the personal area network system 80. The step 204 may further comprise detecting, by the access device 5, the mobile user device 6 in the personal area network. The mobile user device 6 is connected to the personal area network provided by the personal area network system, and further the mobile user device may also connect, be connectable, or be connected to the personal area network automatically or by a request of the user.

In step 204 the method may comprise establishing, by the access device 5, or by the mobile user device 6, or by the access device 5 and the mobile user device 6, the wireless personal area communication connection between the access device 5 and the mobile user device in the personal area network. Accordingly, the device-to-device communication connection between the access device 5 and the mobile user device 6 may be provided or initiated by the access device 5 or by the mobile user device 6, or by both. In this embodiment, the step may comprise establishing for example the Bluetooth, near field, Z-wave, infrared, communication connection between the access device 5 and the mobile user device 6 in the personal area network.

Alternatively, in the step 204 the method may comprise providing, by the personal area network system 80, the wireless personal area network. The step 204 may in some embodiments comprise providing, by the personal area network system 80, the Wi-Fi or Zigbee network.

The method, as shown in figure 5, comprises a step 206 for receiving, in the mobile user device 6, the biometric input from the access device 5 when the mobile user device 6 is detected by the access device. Therefore, when access device 5 has detected the mobile user device 6 in the proximity and established the communication connection between the access device 5 and the mobile user 6, as described above, the biometric input may be received in the mobile user device 6. The biometric input captured by the biometric sensor 9 of the access device 5 may be received in the mobile user device 6 via the communication connection between the access device 5 and the mobile user device 6, or via the personal area network.

The biometric input may be sent by the access device 5 to the mobile user device via the communication connection or the personal area network. Further, the biometric input may be received in the mobile user device 6 from the access device 5 via the communication connection or the personal area network.

The method further comprises a step 208 for maintaining, in the mobile user device 6, one or more digital biometric templates, the one or more digital biometric templates being generated from biometric information of the user. Accordingly, the biometric templates represent the original biometric information of the user and the user or owner of the mobile user device 6. The biometric template(s) may be generated by the mobile user device 6 and more specifically with a biometric sensor provided in the mobile user device 6. The mobile user device may comprise the memory or the security unit, as described above, and the biometric template(s) may be stored to the memory or the security unit. The biometric template of the user may be stored for example as image or voice data, but preferably the biometric template(s) is stored in encrypted for, and/or more preferably as a mathematical model or function, by utilizing parameters provided during capturing the of the biometric template from the user. The biometric template(s) are used as the reference information or reference biometric information for determining access.

The verification step 200 further comprises step 210 for determining, by the mobile user device 6, verification of the user based on the biometric input received in the mobile user device 6 and the one or more digital biometric templates.

In the step 210, the biometric input received from the access device 5 is compared to the one or more biometric templates of the user in the mobile user device 6. In one embodiment, the comparison is made in or by the security unit of the mobile user device 6.

Then in step 212 of the verification method, the mobile user device 6, or the security unit may define if the biometric input matches the one or more biometric templates, or if the biometric input matches at least one of the one or more biometric templates.

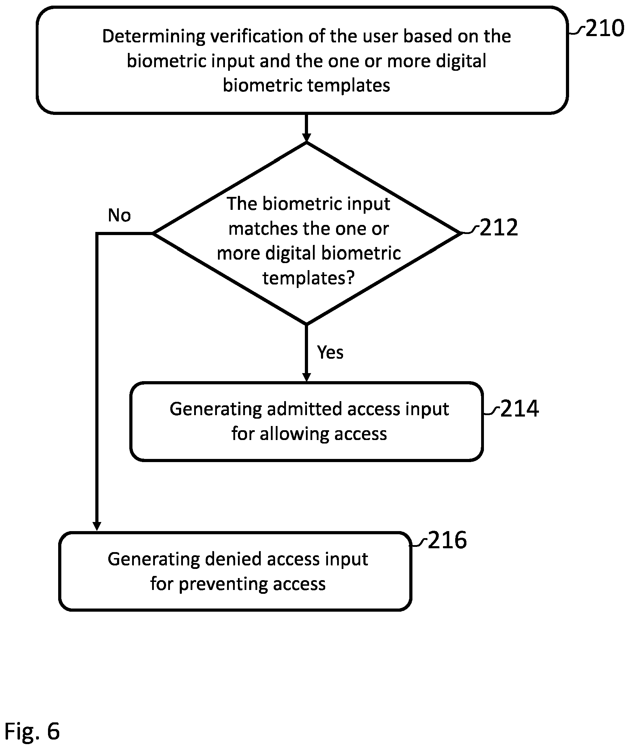

Figure 6 shows further determining the verification of the user. The mobile user device 6, or the security unit of the mobile user device, generates a verification output or verification result based on the biometric input or based on the biometric input and the one or more biometric templates in step. Further, the mobile user device 6 or the security unit thereof, may generate the verification output based on the comparison of the biometric input and the one or more biometric templates in step 212. The verification output may be an input for the access device 5. Accordingly, the verification output may be an admitted verification access input for allowing access or "yes" input. Alternatively, the verification output may be a denied verification access input for preventing access or "no" input.

Based on the step 212 if the biometric input received in the mobile user device 6 matches with the one or more digital biometric templates, the verification method comprises in step 214 generating, by the mobile user device 6 or by the security unit thereof, an admitted verification access input for allowing access. The admitted verification access input may then be received in the access device 5. Accordingly, the admitted verification access input may be received in the access device 5 from the mobile user device 5. Then, the access device 5 may provide or allow access to the facility based on or as a response to receiving the admitted verification access input.

Alternatively, if the biometric input received in the mobile user device 6 differs from the one or more digital biometric templates, the verification method comprises in step 216 generating, by the mobile user device 5 or by the security unit thereof, a denied verification access input for preventing access. The denied verification access input may then be received in the access device 5. Accordingly, the denied verification access input may be received in the access device 5 from the mobile user device 5. Then, the access device 5 may prevent access to the facility based on or as a response to receiving the denied verification access input.

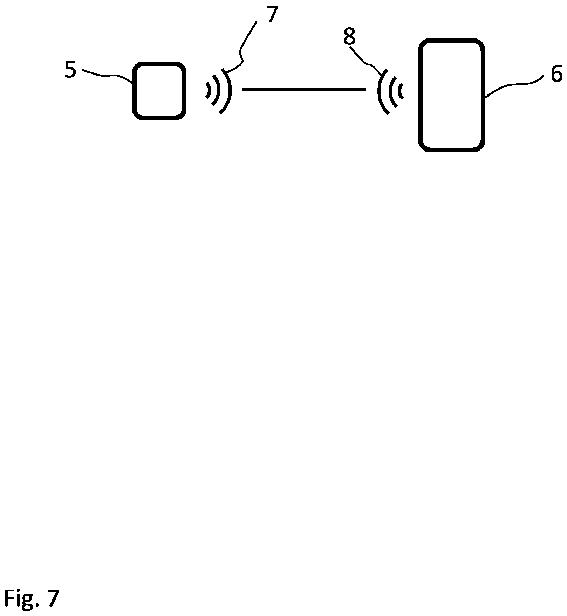

Figure 7 shows the system for the verification step 200. The verification step 200 with steps 202 to 216 may be carried out by utilizing access device 5 and the mobile user device 6, and the personal area network or the first and second wireless communication unit 7, 8. Accordingly, the verification step 200 may be performed only between the access device 5 and the mobile user device 6.

The method according to the present invention may further an authorization step 300. In the authorization step 300 authorization of the user is determined, meaning authorization for the user access the facility by utilizing the access device 5. Accordingly, it may not be enough that the identity of the user is verified in the verification step 200, but it should also be checked whether the user is authorized for access. The verification step 200 identifies the user trying to access the facility and ensures that the user is at the facility by utilizing the biometric template in the mobile user device 6 and the personal area network in the proximity of the access device 5.

The authorization step 300 is preferably carried only after a successful verification step.

In the authorization step 300 the user is compared to a list of authorized users for determining authorization of the user for access. Furthermore, in some embodiments, the access device 5 may be compared to a list authorized access device 5 for the user for determining whether the access device 5 is authorized for the user.

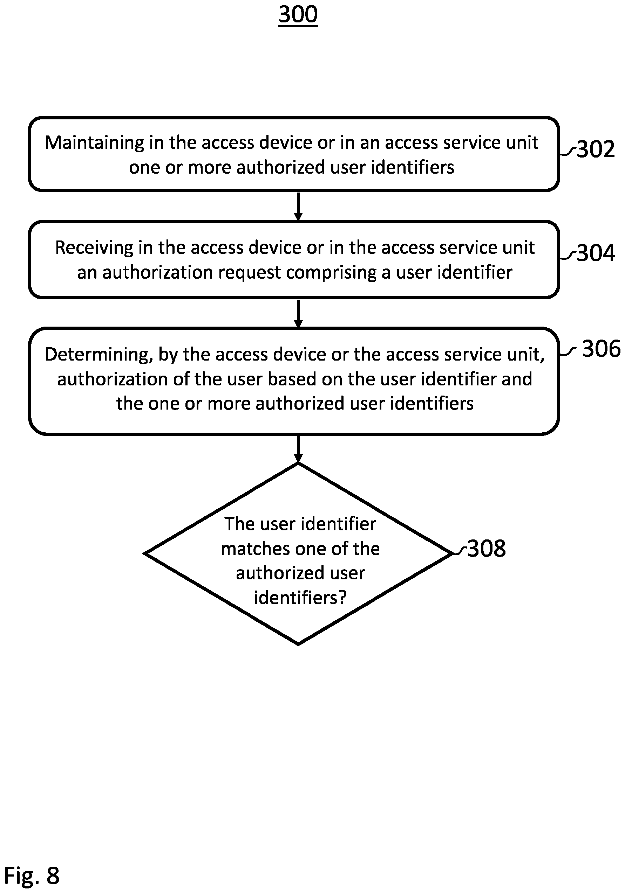

Figure 8 shows one embodiment of the authorization step 300. The authorization step 300 comprises providing a user identifier for identifying the user. It should be noted, that the user identifier may be an identifier of the user or an identifier of mobile user device. The user identifier may be any identifier, such as identifier number or code, special to a certain user or certain mobile user device. The user identifier may be stored to the mobile user device 6 or to the user service unit 60 in association of a user account of the user or in association of the mobile user device 6.

The step 302 comprises maintaining, in the access device 5 or in the access service unit 50 of the access server system 70, one or more authorized user identifiers. Accordingly, in the access device 5 or the access service unit 50, or in the database 58 thereof, it is stored, the one or more authorized user identifier. The one or more authorized user identifiers corresponding users or mobile user devices 6 being authorized for access to the facility 2.

The authorization step 300 further comprises step 304 for receiving, in the access device 5 or the access service unit 50 of the access server system 70, an authorization request for the user, the authorization request comprises the user identifier corresponding the mobile user device 6 or the user of the mobile user device 6. The user identifier received in the access device 5 or the access service unit 50 of the access server system 70 identifies the user or the mobile user device 6 requesting access to the facility 2. In one embodiment, the user identifier may be received in the access device 5 or in the access service unit 50 from the mobile user device 6. In another embodiment, the user identifier may be received in the access device 5 or in the access service unit 50 from the user service unit 60.

Then, the authorization step 300 comprises step 306 determining, by the access device 5 or by the access service unit 50 of the access server system 70, authorization of the user or the mobile user device 6 of the user based on the user identifier. In one embodiment, the step 306 of determining, by the access device 5 or by the access server system 70, authorization of the user or the mobile user device 6 of the user is carried out by comparing the user identifier and the one or more authorized user identifiers. The step 306 may be carried out by the access 5 when the user identifier is received in the access device 5 and the list of one or more authorized user identifiers is maintained in the access device 5. Alternatively, the step 306 may be carried out by the access service unit 50 when the user identifier is received in the access service unit 50 and the list of one or more authorized user identifiers is maintained in the access service unit 50.

Then in step 308 of the authorization method, the access device 5, or the access service unit 50 may define if the user identifier matches the one or more authorized user identifiers, or if the user identifier matches at least one of the one or more authorized user identifiers. Based on step 308, it is generated, by the mobile user device 6 or by the access device or by the access server system 70, or by the access service unit 50, and authorization access input for access based on the determining the authorization in the authorization step. The access device, or access service unit 50 or the mobile user device 5 may generate an authorization output or authorization result based on the user identifier or based on the user identifier and the one or more authorized user identifiers in step 308. The authorization output may be an input for the access device 5. Accordingly, the authorization output may be an admitted authorization access input for allowing access or "yes" input. Alternatively, the authorization output may be a denied authorization access input for preventing access or "no" input.

Based on step 308 if the user identifier received in the access device 5 or in the access service unit 50 matches the one or more authorized user identifiers, or one of the one or more authorized user identifiers, generating, by the access device 5 or the access service unit 50 or the mobile user device 6, an admitted access input for allowing access. Similarly, if the user identifier received in access device 5 or in the access service unit 50 differs from the one or more authorized user identifiers, or one of the one or more authorized user identifiers, generating, by the access device 5 or the access service unit 50 or the mobile user device 6, a denied access input for preventing access.

When the authorization step 300 is carried out with the access service unit 50, the authorization output may be received in the mobile user device 6 from the access service unit 50. Thus, the authorization output maybe received in the access device 5 as the authorization input. Alternatively, the authorization step 300 is carried out with the access device 5, and the authorization output form the authorization input in the access device 5.

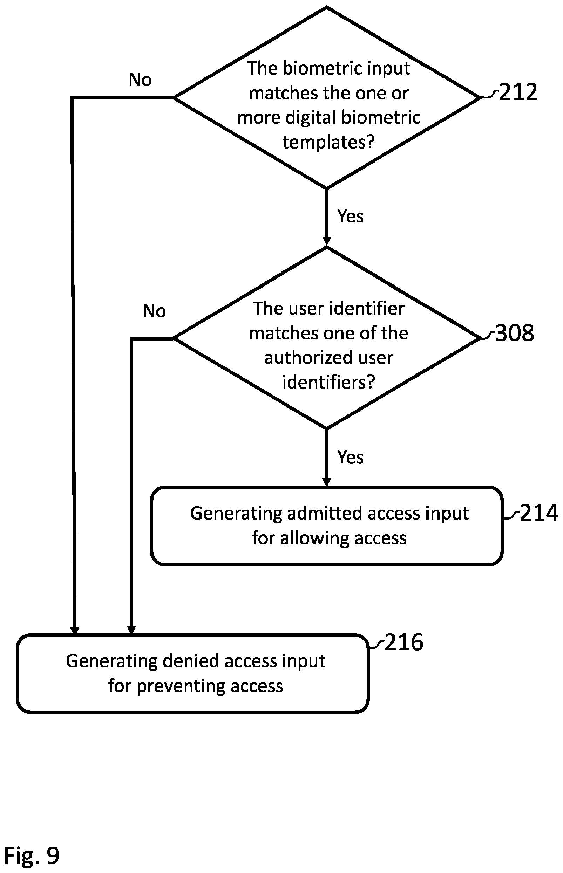

Figure 9 shows a combination verification step 200 and authorization step 300 for determining access to the facility 2. As shown in figure 9, if the biometric input matches with one of the one or more digital biometric templates in step 212 and the user identifier matches with one of the authorized user identifiers in step 308, then an admitted access input is generated for allowing access to the facility 2 in step 214. However, if the biometric input differs from one of the one or more digital biometric templates in step 212 or the user identifier differs from one of the authorized user identifiers in step 308, then a denied access input is generated for preventing access to the facility 2 in step 216. Accordingly, both the verification step 200 and the authorization step 300 have to provide admitted access output, for allowing access to the facility. Thus, if verification of the user or the authorization of the user fails, access to the facility is denied.

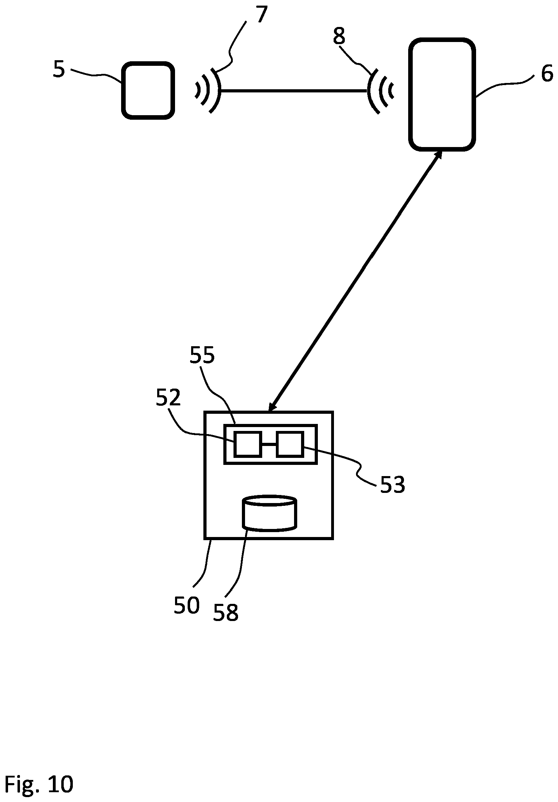

Figure 10 shows one embodiment of the system according to figures 8 and 9. The verification step 200 and the authorization step 300 with steps 302 to 308 may be carried out by utilizing access device 5 and the mobile user device 6, and the personal area network or the first and second wireless communication unit 7, 8. Accordingly, the verification step and the authorization step 300 may be performed only between the access device 5 and the mobile user device 6, when the one or more authorized user identifiers are stored in the access device 5.

Alternatively, the verification step 200 may be carried out with by utilizing access device 5 and the mobile user device 6, and the personal area network or the first and second wireless communication unit 7, 8. The authorization step 300 is further carried out by the access service unit 50 and the mobile user device 6 when the one or more authorized user identifiers are stored in the access service unit 50 or the access server system 70.

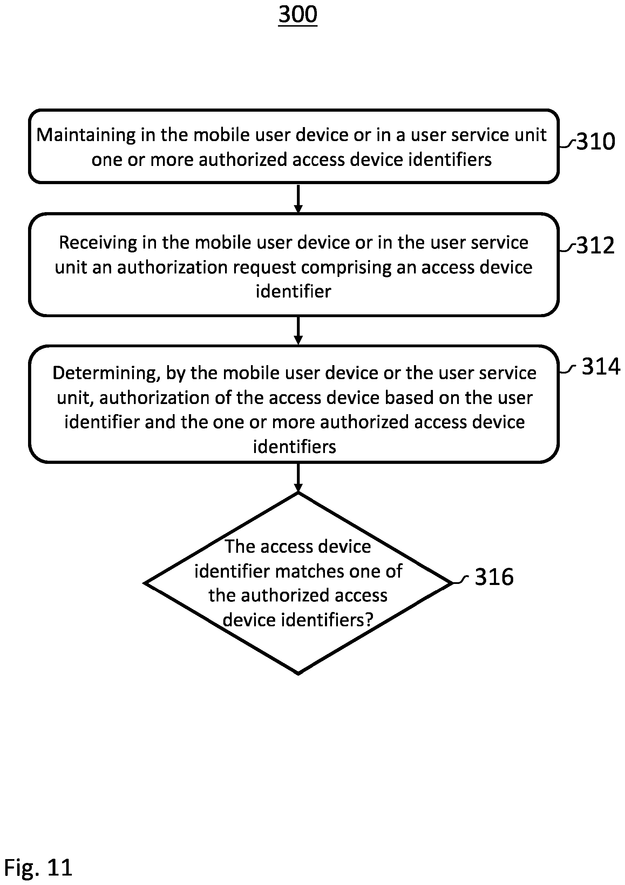

Figure 11 shows a further embodiment in which the authorization step 300 further comprises authorizing the access device 5 for the user or the mobile user device 6 of the user. In this embodiment, the access device 5 may be compared to a list authorized access device 5 for the user for determining whether the access device 5 is authorized for the user. This may be carried out in addition to the above described authorization of the user or instead of the above described authorization of the user.

Figure 11 shows one embodiment of the authorization step 300 for authorizing the access device 5. The authorization step 300 comprises providing an access device identifier for identifying the access device 5. The access device identifier may be any identifier, such as identifier number or code, special to a certain access device 5. The access device identifier may be stored to the access device 6 or to the user service unit 60 in association of the access device account.

The step 310 comprises maintaining, in the access device 5 or in the user service unit 60 of the access server system 70, one or more authorized access device identifiers. Accordingly, in the access device 5 or the user service unit 60, or in the database 68 thereof, it is stored, the one or more authorized access device identifiers. The one or more authorized access device identifiers corresponding one or more access devices 5 being authorized for a certain user or mobile user device 6.

The authorization step 300 further comprises step 312 for receiving, in the mobile user device 6 or the user service unit 60 of the access server system 70, an authorization request for the access device 5, the authorization request comprises the access device identifier corresponding the access device 5 to which the user is requesting access or to which the mobile user device 6 is connected. The access device identifier received in the mobile user device 6 or the user service unit 60 of the access server system 70 identifies the access device 5 for which access is requested. In one embodiment, the access device identifier may be received in the mobile user device 6 or in the user service unit 60 from the access device 5. In another embodiment, the access device identifier may be received in the mobile user device 5 or in the user service unit 60 from the access service unit 50.

Then, the authorization step 300 comprises step 314 determining, by the mobile user device 6 or by the user service unit 60 of the access server system 70, authorization of the access device based on the access device identifier. **In** one embodiment, the step 314 of determining, by the mobile user device 5 or by the access server system 70, authorization of the access device 5 is carried out by comparing the access device identifier and the one or more authorized access device identifiers. The step 314 may be carried out by the mobile user device 6 when the access device identifier is received in the mobile user device 5 and the list of one or more authorized access device identifiers is maintained in the mobile user device 6. Alternatively, the step 314 may be carried out by the user service unit 60 when the access device identifier is received in the user service unit 60 and the list of one or more authorized access device identifiers is maintained in the user service unit 60.

Then in step 316 of the authorization method, the mobile user device 6, or the user service unit 60 may define if the access device identifier matches the one or more authorized access device identifiers, or if the access device identifier matches at least one of the one or more authorized access device identifiers. Based on step 316, it is generated, by the mobile user device 6 or by the access server system 70, or by the user service unit 60, and authorization access input for access based on the determining the authorization in the authorization step. The mobile user device 6, or user service unit 60 may generate an authorization output or authorization result based on the access device identifier or based on the access device identifier and the one or more authorized access device identifiers in step 316. The authorization output may be an input for the access device 5. Accordingly, the authorization output may be an admitted authorization access input for allowing access or "yes" input. Alternatively, the authorization output may be a denied authorization access input for preventing access or "no" input.

Based on step 316 if the access device identifier received in the mobile user device 6 or in the user service unit 60 matches the one or more authorized access device identifiers, or one of the one or more authorized access device identifiers, generating, by the mobile user device 6 or the user service unit 60, an admitted access input for allowing access. Similarly, if the access device identifier received in mobile device 6 or in the user service unit 60 differs from the one or more authorized access device identifiers, or one of the one or more authorized access device identifiers, generating, by the mobile user device 6 or the user service unit 60, a denied access input for preventing access.

When the authorization step 300 is carried out with the user service unit 60, the authorization output may be received in the mobile user device 6 from the user service unit 60. Thus, the authorization output maybe received in the access device 5 as the authorization input. Alternatively, the authorization step 300 may be carried out with the mobile user device 6, and the authorization output form the authorization input in the access device 5.

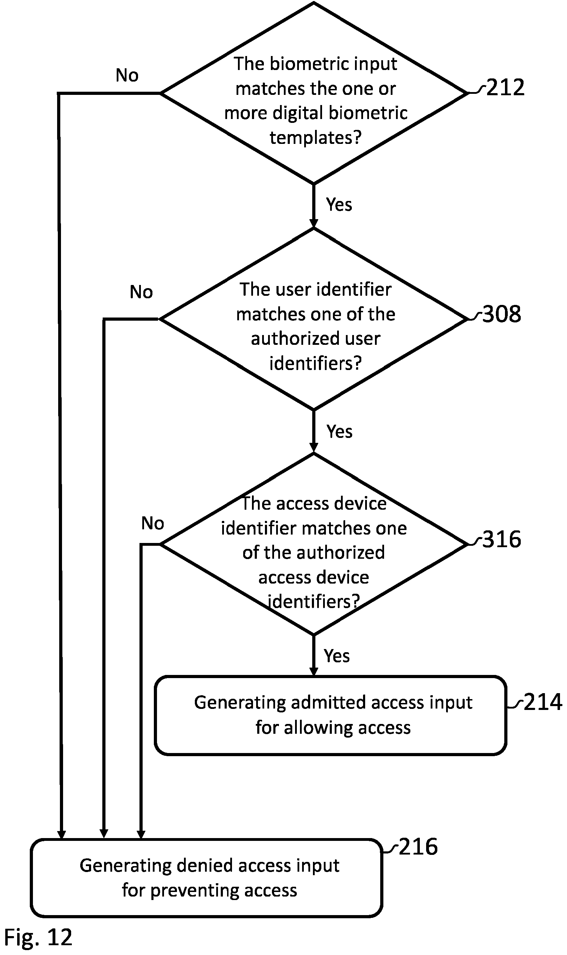

Figure 12 shows a combination verification step 200 and both authorization steps 300 for determining access to the facility 2. As shown in figure 12, if the biometric input matches with one of the one or more digital biometric templates in step 212 and the user identifier matches with one of the authorized user identifiers in step 308, and further the access device identifier matches with one of the authorized access device identifiers in step 316, then an admitted access input is generated for allowing access to the facility 2 in step 214. However, if the biometric input differs from one of the one or more digital biometric templates in step 212 or the user identifier differs from one of the authorized user identifiers in step 308, or the and the access device identifier differs from one of the authorized access device identifiers in step 316, then a denied access input is generated for preventing access to the facility 2 in step 216. Accordingly, both the verification step 200 and both authorization steps 300 have to provide admitted access output, for allowing access to the facility 2. Thus, if verification of the user or the authorization of the user, or authorization of the access device 5 fails, access to the facility is denied.

As shown in figure 12, the step 308 is carried out after step 308. Thus, the user identifier is received in the in the access device or in the access server system 70 after the verification and as a response to successful verification of the user. Preferably, the user identifier is received from the mobile user device 6.

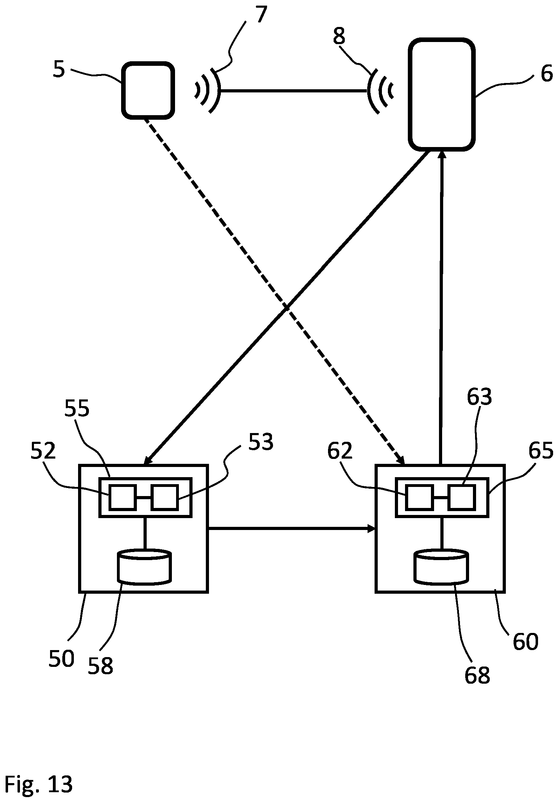

Figure 13 shows one embodiment of the system according to figures 8 and 9. The verification step 200 and the authorization step 300 with steps 302 to 316 may be carried out by utilizing access device 5 and the mobile user device 6, and the personal area network or the first and second wireless communication unit 7, 8. Accordingly, the verification step and both authorization steps 300 may be performed only between the access device 5 and the mobile user device 6, when the one or more authorized user identifiers and the one or more authorized access device identifiers are stored in the access device 5 and in the mobile user device 6, respectively.

Alternatively, the verification step 200 may be carried out with by utilizing access device 5 and the mobile user device 6, and the personal area network or the first and second wireless communication unit 7, 8. The authorization step 300 for user authorization may be carried out by the access service unit 50 and the mobile user device 6 when the one or more authorized user identifiers are stored in the access service unit 50 or the access server system 70. Further, the authorization step 300 for access device authorization may be carried out by the user service unit 60 and the mobile user device 6 when the one or more authorized user identifiers are stored in the user service unit 60 or the access server system 70.

As shown in figure 13, the access device identifier may be received in the user service unit 60 directly from the access device 5 or via the mobile user device 6, or from the access service unit 50.

The data transferred between the access device 5 and the mobile user device 6 may be encrypted. In one embodiment, the data may be encrypted using public-key cryptography. Thus, the access device may comprise a public access device encryption key and an encrypted private access device encryption key. Similarly, the mobile user device may comprise a public user device encryption key and an encrypted private user device encryption key.

Thus, the method of the present invention may comprise providing, in the access device 5 or in the access service unit 50 of the authorization server system 70, a public user device encryption key, from the mobile user device 6, and maintaining, in the user device 6 or in the in the user service unit 60 of the authorization server system 70, an encrypted private user device encryption key. The method may further comprise encrypting, by the access device 5 or by the access service unit 50 of the authorization server system 70, the biometric input of the user with the public user device encryption key, receiving, in the mobile user device 6, the encrypted biometric input and decrypting, in the mobile user device 6, the encrypted biometric input by utilizing the encrypted private user device encryption key. Thus, the biometric input from the access device 5 may be sent to the mobile user device 6 in encrypted from.

Similarly, the method may comprise providing, in the user device 6, a public access device encryption key, and maintaining, in the access device 5, an encrypted private access device encryption key. The method may further comprise encrypting, by the user device 6, the access input or the verification access input, or the admitted access input, or the denied access input and/or the authorization input with the public access device encryption key, receiving, in the access device 5, the encrypted access input or the verification access input, or the admitted access input, or the denied access input, and decrypting, in the access device 6, the encrypted access input or the verification access input, or the admitted access input, or the denied access input, and/or the authorization input, by utilizing the encrypted private access device encryption key. Thus, the verification input and/or the authorization output from the mobile user device 6 may be sent to the access device 6 in encrypted from.

Further, the access service unit 50 may comprise a public access service encryption key and an encrypted private access service encryption key. Similarly, the user service unit 60 may comprise a public user service encryption key and an encrypted private user service encryption key.

Accordingly, all data transfers, such as user identifiers, access device identifiers and authorization outputs received in the access service unit 50 may be encrypted using the public access service encryption key and the encrypted private access service encryption key in known manner. Similarly, all data transfers, such as user identifiers, access device identifiers and authorization outputs received in the user service unit 60 may be encrypted using the public user service encryption key and the encrypted private user service encryption key in known manner. Furthermore, all data transfers, such as user identifiers, access device identifiers and authorization outputs received in the mobile user device 6 from the access service unit 50 and/or from the user service unit 60 may be encrypted using the public user device encryption key and the encrypted private user device encryption key in known manner.

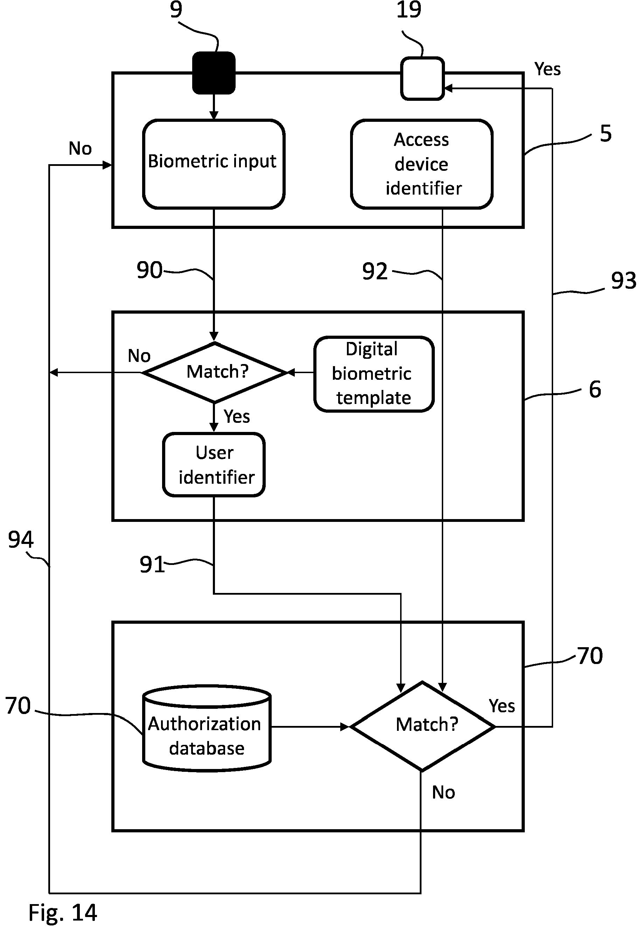

Figure 14 shows schematically one embodiment of the present invention.

In the method according to figure 14, the biometric sensor 9 of the access device captures a biometric input from a user, or the method comprises receiving, in the access device 5, the biometric input of the user. The method further comprises detecting, by the access device 5, the mobile user device 6 in proximity of the access device 5, and receiving, in the mobile user device 6, the biometric input from the access device 5 when the mobile user device 6 is detected by the access device 5, as shown with communication line 90.

In the mobile user device 6 or in the memory thereof or in the security unit 11 thereof is stored the digital biometric template of the user. Accordingly, the method comprises maintaining, in the mobile user device 6, the digital biometric template, the digital biometric template being generated from biometric information of the user. Then the method comprises determining, by the mobile user device 6 or by the security unit 11 thereof, verification of the user based on the biometric input received in the mobile user device 6 and the digital biometric template. The determining may comprise comparing the biometric input and the digital biometric template for determining if they match, as shown in figure 14.

If the biometric input received in the mobile user device 6 differs from the digital biometric templates, generating, by the mobile user device 6, a denied verification access input for preventing access. The denied verification access input may be then received in the access device 5, as shown with the communication line 94, and thus the access is denied. In this case, the method ends and no further access requests are generated and the method is not continued.

If the biometric input received in the mobile user device 6 matches with the one or more digital biometric templates, generating, by the mobile user device 6, an admitted verification access input. The mobile user device 6 may comprise the user identifier stored to the mobile user device 6 or in the memory thereof. Generating the admitted verification input, by the mobile user device 6, may comprise initiating the authorization step based on the determining the verification of the user when the biometric input matches the digital biometric template. Further, generating the admitted verification input, by the mobile user device 6, may comprise generating the authorization request for the user or generating the authorization request and incorporating the user identifier to the authorization request for the user.

Then, the method comprises receiving, in the access server system 70, the authorization request for the user, the authorization request comprising a user identifier, the user identifier corresponding the mobile user device 6 or the user of the mobile user device 6. The authorization request may be received from the mobile user device 6 via the communication line 91, as shown in figure 14. The authorization request for the user is then processed in the access server system 70 and the authorization of the user 2 is determined, by the access server system 70, based on the user identifier.

The method may further comprise maintaining, in the access server system 70 on in an authorization database 58, 68, one or more authorized user identifiers, and receiving, in the access server system 70, an authorization request for the user, the authorization request comprising a user identifier, the user identifier corresponding the mobile user device 6 or the user of the mobile user device 6. Then the method comprises determining, by the access server system 70, authorization of the user by comparing the user identifier and the one or more authorized user identifiers, as shown in figure 14.

If the user identifier received in the access server system 70 differs from the one or more authorized user identifiers, generating, by the access server system 70, a denied authorization access input for preventing access. The denied authorization access input may be then received in the access device 5, as shown with the communication line 94, and thus the access is denied. In this case, the method ends and no further access requests are generated and the method is not continued.

If the user identifier received in access server system 70 matches with the one or more authorized user identifiers, generating, by the access server system 70, an admitted authorization access input. The admitted authorization access input may be then received in the access device 5, as shown with the communication line 93, and thus the access is granted or enabled for the user.

Further, system and method may also comprise authorization of the user to the specific access device 5.

Then, the method in the embodiment of figure 14 may further comprise receiving, in the access server system 70, from the access device 5 an access device identifier, the access device identifier corresponding the access device 5. The access device identifier may be received in the access server system 70 directly from the access device 5 via the communications network 100 or a communication line 92. Alternatively, the access device identifier may be received, in the mobile user device 6, from the access device 5 via the communication connection between the access device 5 and the mobile user device 6, for example via the personal area network. In the latter case the method comprises receiving, in the access server system 70, from the mobile user device 6 the access device identifier, the access device identifier corresponding the access device 5.

In one embodiment, the access device identifier may be incorporated to the authorization request comprising the user identifier. Accordingly, the method may comprise receiving, in the access server system 70, the authorization request, the authorization request comprising the user identifier and the access device identifier.

The method may thus comprise authorization of the access device 5 or authorization of the user or the mobile user device 6 for the access device 5. Thus, the method may comprise receiving, access server system 70, the access device identifier corresponding the access device 5 and determining, by the access server system 70, authorization of the access device 5 based on the access device identifier. The method further comprises maintaining, in the access server system 70, one or more authorized access device identifiers, receiving, in the access server system 70, from the access device 5 or from the mobile user device 6, and determining, by the access server system 70, authorization of the access device 5 or authorization of the user or the mobile user device to the access device based on the access device identifier with the one or more authorized access device identifiers, or by comparing the access device identifier with the one or more authorized access device identifiers.

Accordingly, in the access server system 70 there are one or more authorized access device identifiers associated with one or more authorized user device identifiers.

If the access device identifier received in the access server system 70 differs from the one or more authorized access device identifiers, generating, by the access server system 70, a denied authorization access input for preventing access. The denied authorization access input may be then received in the access device 5, as shown with the communication line 94, and thus the access is denied. In this case, the method ends and no further access requests are generated and the method is not continued.

If the access device identifier received in access server system 70 matches with the one or more authorized access device identifiers, generating, by the access server system 70, an admitted authorization access input. The admitted authorization access input may be then received in the access device 5, as shown with the communication line 93, and thus the access is granted or enabled for the user.

In one embodiment, the method comprises, maintaining, in the access server system 70, one or more authorized user identifiers and one or more authorized access device identifiers, and receiving, in the access server system 70, the user identifier, or the authorization request comprising the access device identifier, and the access device identifier. The method further comprises determining, by the access server system 70, authorization of the access device 5 or authorization of the user for the access device 5 by comparing by comparing the user identifier and the one or more authorized user identifiers and by comparing the access device identifier with the one or more authorized access device identifiers, as shown in figure 14.

If the access device identifier received in access server system 70 differs from the one or more authorized access device identifiers or if the user identifier received in access server system 70 differs from the one or more authorized user identifiers, generating, by the access server system 70, a denied authorization access input for preventing access. Alternatively, if the access device identifier received in access server system 70 differs from the one or more authorized access device identifiers and if the user identifier received in access server system 70 differs from the one or more authorized user identifiers, generating, by the access server system 70, a denied authorization access input for preventing access. The denied authorization access input may be then received in the access device 5, as shown with the communication line 94, and thus the access is denied. In this case, the method ends and no further access requests are generated and the method is not continued.

If the access device identifier received in access server system 70 matches with the one or more authorized access device identifiers and if the user identifier received in access server system 70 matches with the one or more authorized user identifiers, generating, by the access server system 70, an admitted authorization access input. The admitted authorization access input may be then received in the access device 5, as shown with the communication line 93, and thus the access is granted or enabled for the user.

In one embodiment, the one or more authorized access device identifiers and the one or more authorized user identifiers are associated with each other or linked to each other for determining authorized users for each access device 5 in the access server system 70 or in the authorization database 71, 58, 68 of the access server system 70. Accordingly, there may be one or more user identifiers associated with one access device identifier for determining which user are authorized to access the one access device.

Thus, in one embodiment, each authorized access device identifier is associated with one or more authorized user identifiers in the access server system 70. In the authorization step, the user identifier and the access device identifier are received in the access server system 70. Therefore, in the authorization step the received access device identifier identifies the access device for authorization and thus also the authorized user identifiers associated to the identified authorized access device. Then the received user identifier is compared to the authorized user identifiers associated with the authorized access device identifier.

The access device identifier and the user identifier received in the access server system 70, may be associated to the each other. For example, the authorization request received in the access server system 70 may comprise the user identifier and the access device identifier, as shown in figure 14. Thus, both the access device identifier and the user identifier may be received in the access server system 70 from the mobile user device 6 or from the access device 6. Accordingly, the user identifier may be first received in the access device 5 from the mobile user device 6 or the access device identifier may be first received in the mobile user device 6 from the access device 5.

In this case, if the access device identifier and the user identifier received in access server system 70 differs from the one or more authorized access device identifiers associated with one or more authorized user identifiers, generating, by the access server system 70, a denied authorization access input for preventing access. Alternatively, if the authorized access device identifier corresponding the received access device identifier is not associated with authorized user device identifier corresponding the received user device identifier, generating, by the access server system 70, a denied authorization access input for preventing access.

Further in this case, if the access device identifier and the user identifier received in access server system 70 match the one or more authorized access device identifiers associated with one or more authorized user identifiers, generating, by the access server system 70, an admitted authorization access input for enabling access. Alternatively, if the authorized access device identifier corresponding the received access device identifier is associated with authorized user device identifier corresponding the received user device identifier, generating, by the access server system 70, an admitted authorization access input for enabling access.

According to the above mentioned, the method may be configured such that first the verification of the user is carried out for verifying the user. Then the authorization is carried out by determining if the user is authorized for access, or if the user is authorize for access to the specific access device.

It should be noted, the all the process steps carried out by the access server system 70 may also be carried out with the mobile user device 6 in case where all the authorization data is stored to the mobile user device 6.

In all the embodiments, the access device 5 may comprise an actuator 19 or the access device may be connected to an actuator 19. The admitted authorization access input may be provided to operate the actuator 19 for providing the access. Accordingly, the access device 5 may be configured to operate the actuator 19 in response to the admitted authorization access input.

The invention has been described above with reference to the examples shown in the figures. However, the invention is in no way restricted to the above examples but may vary within the scope of the claims.

## Claims

1. A method for controlling an access device (5), the access device (5) being connectable with a mobile user device (6), the access device (5) and the mobile user device (6) being connectable to an access server system (70) via a communication network (100), the method comprising a verification step for verifying a user, the verification step comprising:
- receiving, in the access device (5), a biometric input of the user;
- detecting, by the access device (5), the mobile user device (6) in proximity of the access device (5);
- receiving, in the mobile user device (6), the biometric input from the access device (5) when the mobile user device (6) is detected by the access device (5);
- maintaining, in the mobile user device (6), one or more digital biometric templates, the one or more digital biometric templates being generated from biometric information of the user;
- determining, by the mobile user device (6), verification of the user based on the biometric input received in the mobile user device (6) and the one or more digital biometric templates;
- generating, by the mobile user device (6), a verification access input based on determining the verification in the verification step; and
- receiving, in the access device (5), the verification access input from the mobile user device (6),
**characterized in that**:
if the biometric input received in the mobile user device (6) differs from the digital biometric templates, generating, by the mobile user device (6), a denied verification access input for preventing access; and
if the biometric input received in the mobile user device (6) matches with the one or more digital biometric templates, generating, by the mobile user device (6), an admitted verification access input for allowing access, generating the admitted verification input comprises initiating an authorization step based on the determining the verification of the user when the biometric input matches the digital biometric template and generating an authorization request for authorizing the user, the authorization step comprising:
- maintaining, in a user service unit (60) of the access server system (70), one or more authorized access device identifiers;
- maintaining, in an access service unit (50) of the access server system (70), one or more authorized user identifiers, the one or more authorized access device identifiers being associated with the one or more authorized user device identifiers in the access server system (70);
- receiving, in the access service unit (50) of the access server system (70), from the mobile user device (6) the authorization request for the user, the authorization request comprising a user identifier, the user identifier corresponding the mobile user device (6) or the user of the mobile user device (6);
- receiving, in the user service unit (60) of the access server system (70), from the access device (5) an access device identifier, the access device identifier corresponding the access device (5);
- determining, by the access server system (70), authorization of the user by comparing the user identifier and the one or more authorized user identifiers and by comparing the access device identifier with the one or more authorized access device identifiers; and
- if the access device identifier matches with the one or more authorized access device identifiers and if the user identifier matches with the one or more authorized user identifiers, generating, by the access server system (70), an admitted authorization access input for enabling access.

2. A method according to claim 1, **characterized in that** the receiving, in the access device (5), the biometric input of the user comprises:
- capturing, by the access device (5), the biometric input of the user; and
- generating, by the access device (5), a digital biometric input from the biometric input of the user, the digital biometric input being received, in the mobile user device (6), as the biometric input of the user; or
- capturing, by a biometric sensor provided in connection with the access device (5), the biometric input of the user; and
- generating, by the access device (5), a digital biometric input from the biometric input of the user, the digital biometric input being received, in the mobile user device (6), as the biometric input of the user.

3. A method according to claim 1 or 2, **characterized in that** the detecting, by the access device (5), the mobile user device (6) in proximity of the access device (5) comprises:
- establishing, by the access device (5) or by the access device (5) and the mobile user device (6), a communication connection between the access device (5) and the mobile user device (6); or
- detecting, by the access device (5), the mobile user device (6) in a personal area network in the proximity of the access device (5); and
- establishing, by the access device (5), or by the mobile user device (6), or by the access device (5) and the mobile user device (6), a communication connection between the access device (5) and the mobile user device (6) in the personal area network; or
- providing, by a personal area network system (80), a personal area network in the proximity of the access device (5), the access device (5) being connected to the personal area network;
- detecting, by the access device (5), the mobile user device (6) in the personal area network, the mobile user device (6) being connected to the personal area network provided by the personal area network system (80);
- establishing, by the personal area network system (80), a communication connection between the access device (5) and the mobile user device (6); or
- providing, by the access device (5), a personal area network in the proximity of the access device (5);
- detecting, by the access device (5), the mobile user device (6) in the personal area network, the mobile user device (6) being connected to the personal area network provided by the access device (5),
- establishing, by the access device (5) or by the access device (5) and the mobile user device (6), a communication connection between the access device (5) and the mobile user device (6).

4. A method according to claim 3, **characterized in that** the method comprises:
- establishing, by the access device (5), or by the mobile user device (6), or by the access device (5) and the mobile user device (6), a wireless personal area communication connection between the access device (5) and the mobile user device (6) in the personal area network; or
- establishing, by the access device (5), or by the mobile user device (6), or by the access device (5) and the mobile user device (6), a Bluetooth, near field, Z-wave, infrared, communication connection between the access device (5) and the mobile user device (6) in the personal area network; or
- providing, by the personal area network system (80), a wireless personal area network; or
- providing, by the personal area network system (80), a Wi-Fi or Zigbee network.

5. A method according to any one of claims 1 to 4, **characterized in that** the method comprises:
- providing, in the access device (5) or in the access service unit (50) of the authorization server system (70), a public user device encryption key;
- maintaining, in the user device (6) or in the in the user service unit (60) of the authorization server system (70), an encrypted private user device encryption key;
- encrypting, by the access device (5) or by the access service unit (50) of the authorization server system (70), the biometric input of the user with the public user device encryption key;
- receiving, in the mobile user device (6), the encrypted biometric input; and
- decrypting, in the mobile user device (6), the encrypted biometric input by utilizing the encrypted private user device encryption key.

6. A method according to claim 5, **characterized in that** the method comprises:
- providing, in the user device (6), a public access device encryption key;
- maintaining, in the access device (5), an encrypted private access device encryption key;
- encrypting, by the user device (6), the access input or the verification access input, or the admitted access input, or the denied access input with the public access device encryption key;
- receiving, in the access device (5), the encrypted access input or the verification access input, or the admitted access input, or the denied access input; and
- decrypting, in the access device (6), the encrypted access input or the verification access input, or the admitted access input, or the denied access input by utilizing the encrypted private access device encryption key.

## Patentansprüche

1. Verfahren zum Steuern einer Zugangsvorrichtung (5), wobei die Zugangsvorrichtung (5) mit einer mobilen Benutzervorrichtung (6) verbunden werden kann, wobei die Zugangsvorrichtung (5) und die mobile Benutzervorrichtung (6) über ein Kommunikationsnetzwerk (100) mit einem Zugangsserversystem (70) verbunden werden können, wobei das Verfahren einen Verifizierungsschritt zum Verifizieren eines Benutzers umfasst, wobei der Verifizierungsschritt umfasst:
- Empfangen, in der Zugangsvorrichtung (5), einer biometrischen Eingabe des Benutzers;
- Erkennen, durch die Zugangsvorrichtung (5), der mobilen Benutzervorrichtung (6) in der Nähe der Zugangsvorrichtung (5);
- Empfangen, in der mobilen Benutzervorrichtung (6), der biometrischen Eingabe von der Zugangsvorrichtung (5), wenn die mobile Benutzervorrichtung (6) durch die Zugangsvorrichtung (5) erkannt wird;
- Aufbewahren, in der mobilen Benutzervorrichtung (6), einer oder mehrerer digitaler biometrischer Vorlagen, wobei die eine oder die mehreren digitalen biometrischen Vorlagen aus biometrischen Informationen des Benutzers generiert werden;
- Bestimmen, durch die mobile Benutzervorrichtung (6), einer Verifizierung des Benutzers auf Basis der biometrischen Eingabe, die in der mobilen Benutzervorrichtung (6) empfangen wird, und der einen oder der mehreren digitalen biometrischen Vorlagen;
- Generieren, durch die mobile Benutzervorrichtung (6), einer Zugangsverifizierungseingabe auf Basis des Bestimmens der Verifizierung im Verifizierungsschritt; und
- Empfangen, in der Zugangsvorrichtung (5), der Zugangsverifizierungseingabe von der mobilen Benutzervorrichtung (6),
**dadurch gekennzeichnet, dass**:
wenn die biometrische Eingabe, die in der mobilen Benutzervorrichtung (6) empfangen wird, von den digitalen biometrischen Vorlagen abweicht, Generieren, durch die mobile Benutzervorrichtung (6), einer verweigerten Zugangsverifizierungseingabe, um Zugang zu verhindern; und
wenn die biometrische Eingabe, die in der mobilen Benutzervorrichtung (6) empfangen wird, mit der einen oder den mehreren digitalen biometrischen Vorlagen übereinstimmt, Generieren, durch die mobile Benutzervorrichtung (6), einer gewährten Zugangsverifizierungseingabe, um Zugang zu gestatten, wobei Generieren der gewährten Verifizierungseingabe Initiieren eines Autorisierungsschritts auf Basis des Bestimmens der Verifizierung des Benutzers, wenn die biometrische Eingabe mit der digitalen biometrischen Vorlage übereinstimmt, und Generieren einer Autorisierungsanfrage, um den Benutzer zu autorisieren, umfasst, wobei der Autorisierungsschritt umfasst:
- Aufbewahren, in einer Benutzerdiensteinheit (60) des Zugangsserversystems (70), einer oder mehrerer autorisierter Zugangsvorrichtungskennungen;
- Aufbewahren, in einer Zugangsdiensteinheit (50) des Zugangsserversystems (70), einer oder mehrerer autorisierter Benutzerkennungen, wobei die eine oder die mehreren autorisierten Zugangsvorrichtungskennungen mit der einen oder den mehreren autorisierten Benutzervorrichtungskennungen im Zugangsserversystem (70) verknüpft sind;
- Empfangen, in der Zugangsdiensteinheit (50) des Zugangsserversystems (70), der Autorisierungsanfrage für den Benutzer von der mobilen Benutzervorrichtung (6), wobei die Autorisierungsanfrage eine Benutzerkennung umfasst, wobei die Benutzerkennung der mobilen Benutzervorrichtung (6) oder dem Benutzer der mobilen Benutzervorrichtung (6) entspricht;
- Empfangen, in der Benutzerdiensteinheit (60) des Zugangsserversystems (70), einer Zugangsvorrichtungskennung von der Zugangsvorrichtung (5), wobei die Zugangsvorrichtungskennung der Zugangsvorrichtung (5) entspricht;
- Bestimmen, durch das Zugangsserversystem (70), einer Autorisierung des Benutzers durch Vergleichen der Benutzerkennung und der einen oder der mehreren autorisierten Benutzerkennungen und durch Vergleichen der Zugangsvorrichtungskennung mit der einen oder den mehreren autorisierten Zugangsvorrichtungskennungen; und
- wenn die Zugangsvorrichtungskennung mit der einen oder den mehreren autorisierten Zugangsvorrichtungskennungen übereinstimmt und wenn die Benutzerkennung mit der einen oder den mehreren autorisierten Benutzerkennungen übereinstimmt, Generieren einer gewährten Zugangsautorisierungseingabe durch das Zugangsserversystem (70), um Zugang zu ermöglichen.

2. Verfahren nach Anspruch 1, **dadurch gekennzeichnet, dass** das Empfangen, in der Zugangsvorrichtung (5), der biometrischen Eingabe des Benutzers umfasst:
- Erfassen, durch die Zugangsvorrichtung (5), der biometrischen Eingabe des Benutzers; und
- Generieren, durch die Zugangsvorrichtung (5), einer digitalen biometrischen Eingabe aus der biometrischen Eingabe des Benutzers, wobei die digitale biometrische Eingabe in der mobilen Benutzervorrichtung (6) als die biometrische Eingabe des Benutzers empfangen wird; oder
- Erfassen, durch einen biometrischen Sensor, der in Verbindung mit der Zugangsvorrichtung (5) bereitgestellt wird, der biometrischen Eingabe des Benutzers; und
- Generieren, durch die Zugangsvorrichtung (5), einer digitalen biometrischen Eingabe aus der biometrischen Eingabe des Benutzers, wobei die digitale biometrische Eingabe in der mobilen Benutzervorrichtung (6) als die biometrische Eingabe des Benutzers empfangen wird.

3. Verfahren nach Anspruch 1 oder 2, **dadurch gekennzeichnet, dass** das Erkennen, durch die Zugangsvorrichtung (5), der mobilen Benutzervorrichtung (6) in der Nähe der Zugangsvorrichtung (5) umfasst:
- Aufbauen, durch die Zugangsvorrichtung (5) oder durch die Zugangsvorrichtung (5) und die mobile Benutzervorrichtung (6), einer Kommunikationsverbindung zwischen der Zugangsvorrichtung (5) und der mobilen Benutzervorrichtung (6); oder
- Erkennen, durch die Zugangsvorrichtung (5), der mobilen Benutzervorrichtung (6) in einem persönlichen Netzwerk in der Nähe der Zugangsvorrichtung (5); und
- Aufbauen, durch die Zugangsvorrichtung (5) oder durch die mobile Benutzervorrichtung (6) oder durch die Zugangsvorrichtung (5) und die mobile Benutzervorrichtung (6), einer Kommunikationsverbindung zwischen der Zugangsvorrichtung (5) und der mobilen Benutzervorrichtung (6) in dem persönlichen Netzwerk; oder
- Bereitstellen, durch ein persönliches Netzwerksystem (80), eines persönlichen Netzwerks in der Nähe der Zugangsvorrichtung (5), wobei die Zugangsvorrichtung (5) mit dem persönlichen Netzwerk verbunden ist;
- Erkennen, durch die Zugangsvorrichtung (5), der mobilen Benutzervorrichtung (6) in dem persönlichen Netzwerk, wobei die mobile Benutzervorrichtung (6) mit dem persönlichen Netzwerk, das vom persönlichen Netzwerksystem (80) bereitgestellt wird, verbunden ist;
- Aufbauen, durch das persönliche Netzwerksystem (80), einer Kommunikationsverbindung zwischen der Zugangsvorrichtung (5) und der mobilen Benutzervorrichtung (6); oder
- Bereitstellen, durch die Zugangsvorrichtung (5), eines persönlichen Netzwerks in der Nähe der Zugangsvorrichtung (5);
- Erkennen, durch die Zugangsvorrichtung (5), der mobilen Benutzervorrichtung (6) in dem persönlichen Netzwerk, wobei die mobile Benutzervorrichtung (6) mit dem persönlichen Netzwerk, das von der Zugangsvorrichtung (5) bereitgestellt wird, verbunden ist,
- Aufbauen, durch die Zugangsvorrichtung (5) oder durch die Zugangsvorrichtung (5) und die mobile Benutzervorrichtung (6), einer Kommunikationsverbindung zwischen der Zugangsvorrichtung (5) und der mobilen Benutzervorrichtung (6).

4. Verfahren nach Anspruch 3, **dadurch gekennzeichnet, dass** das Verfahren umfasst:
- Aufbauen, durch die Zugangsvorrichtung (5) oder durch die mobile Benutzervorrichtung (6) oder durch die Zugangsvorrichtung (5) und die mobile Benutzervorrichtung (6), einer drahtlosen persönlichen Kommunikationsverbindung zwischen der Zugangsvorrichtung (5) und der mobilen Benutzervorrichtung (6) in dem persönlichen Netzwerk; oder
- Aufbauen, durch die Zugangsvorrichtung (5) oder durch die mobile Benutzervorrichtung (6) oder durch die Zugangsvorrichtung (5) und die mobile Benutzervorrichtung (6), einer Bluetooth-, Nahfeld-, Z-Wave-, Infrarot-, Kommunikationsverbindung zwischen der Zugangsvorrichtung (5) und der mobilen Benutzervorrichtung (6) in dem persönlichen Netzwerk; oder
- Bereitstellen, durch das persönliche Netzwerksystem (80), eines drahtlosen persönlichen Netzwerks; oder
- Bereitstellen, durch das persönliche Netzwerksystem (80), eines Wi-Fi- oder Zigbee-Netzwerks.

5. Verfahren nach einem der Ansprüche 1 bis 4, **dadurch gekennzeichnet, dass** das Verfahren umfasst:
- Bereitstellen, in der Zugangsvorrichtung (5) oder in der Zugangsdiensteinheit (50) des Autorisierungsserversystems (70), eines öffentlichen Benutzervorrichtungs-Verschlüsselungsschlüssels;
- Aufbewahren, in der Benutzervorrichtung (6) oder in der Benutzerdiensteinheit (60) des Autorisierungsserversystems (70), eines verschlüsselten privaten Benutzervorrichtungs-Verschlüsselungsschlüssels;
- Verschlüsseln, durch die Zugangsvorrichtung (5) oder durch die Zugangsdiensteinheit (50) des Autorisierungsserversystems (70), der biometrischen Eingabe des Benutzers mit dem öffentlichen Benutzervorrichtungs-Verschlüsselungsschlüssel;
- Empfangen, in der mobilen Benutzervorrichtung (6), der verschlüsselten biometrischen Eingabe; und
- Entschlüsseln, in der mobilen Benutzervorrichtung (6), der verschlüsselten biometrischen Eingabe unter Verwendung des verschlüsselten privaten Benutzervorrichtungs-Verschlüsselungsschlüssels.

6. Verfahren nach Anspruch 5, **dadurch gekennzeichnet, dass** das Verfahren umfasst:
- Bereitstellen, in der Benutzervorrichtung (6), eines öffentlichen Zugangsvorrichtungs-Verschlüsselungsschlüssels;
- Aufbewahren, in der Zugangsvorrichtung (5), eines verschlüsselten privaten Zugangsvorrichtungs-Verschlüsselungsschlüssels;
- Verschlüsseln, durch die Benutzervorrichtung (6), der Zugangseingabe oder der Zugangsverifizierungseingabe oder der gewährten Zugangseingabe oder der verweigerten Zugangseingabe mit dem öffentlichen Zugangsvorrichtungs-Verschlüsselungsschlüssel;
- Empfangen, in der Zugangsvorrichtung (5), der verschlüsselten Zugangseingabe oder der Zugangsverifizierungseingabe oder der gewährten Zugangseingabe oder der verweigerten Zugangseingabe; und
- Entschlüsseln, in der Zugangsvorrichtung (6), der verschlüsselten Zugangseingabe oder der Zugangsverifizierungseingabe oder der gewährten Zugangseingabe oder der verweigerten Zugangseingabe unter Verwendung des verschlüsselten privaten Zugangsvorrichtungs-Verschlüsselungsschlüssels.

## Revendications

1. Procédé de commande d'un dispositif d'accès (5), le dispositif d'accès (5) pouvant être connecté à un dispositif d'utilisateur mobile (6), le dispositif d'accès (5) et le dispositif d'utilisateur mobile (6) pouvant être connectés à un système de serveur d'accès (70) via un réseau de communication (100), le procédé comprenant une étape de vérification pour vérifier un utilisateur, l'étape de vérification comprenant les étapes consistant à :
- recevoir, dans le dispositif d'accès (5), une entrée biométrique de l'utilisateur ;
- détecter, par le dispositif d'accès (5), le dispositif d'utilisateur mobile (6) à proximité du dispositif d'accès (5) ;
- recevoir, dans le dispositif d'utilisateur mobile (6), l'entrée biométrique à partir du dispositif d'accès (5) lorsque le dispositif d'utilisateur mobile (6) est détecté par le dispositif d'accès (5) ;
- conserver, dans le dispositif d'utilisateur mobile (6), un ou plusieurs modèles biométriques numériques, le ou les modèles biométriques numériques étant générés à partir d'informations biométriques de l'utilisateur ;
- déterminer, par le dispositif d'utilisateur mobile (6), une vérification de l'utilisateur sur la base de l'entrée biométrique reçue dans le dispositif d'utilisateur mobile (6) et des un ou plusieurs modèles biométriques numériques ;
- générer, par le dispositif d'utilisateur mobile (6), une entrée d'accès de vérification sur la base de la détermination de la vérification à l'étape de vérification ; et
- recevoir, dans le dispositif d'accès (5), l'entrée d'accès de vérification en provenance du dispositif d'utilisateur mobile (6),
**caractérisé par** les étapes consistant à :
si l'entrée biométrique reçue dans le dispositif d'utilisateur mobile (6) diffère des modèles biométriques numériques, générer, par le dispositif d'utilisateur mobile (6), une entrée d'accès de vérification refusée pour empêcher un accès ; et
si l'entrée biométrique reçue dans le dispositif d'utilisateur mobile (6) correspond au ou aux modèles biométriques numériques, générer, par le dispositif d'utilisateur mobile (6), une entrée d'accès de vérification acceptée pour autoriser un accès, la génération de l'entrée de vérification acceptée comprend l'initiation d'une étape d'autorisation sur la base de la détermination de la vérification de l'utilisateur lorsque l'entrée biométrique correspond au modèle biométrique numérique, et la génération d'une demande d'autorisation pour autoriser l'utilisateur, l'étape d'autorisation comprenant les étapes consistant à :
- conserver, dans une unité de service d'utilisateur (60) du système de serveur d'accès (70), un ou plusieurs identifiants de dispositif d'accès autorisé ;
- conserver, dans une unité de service d'accès (50) du système de serveur d'accès (70), un ou plusieurs identifiants d'utilisateur autorisé, le ou les identifiants de dispositif d'accès autorisé étant associés au ou aux identifiants de dispositif d'utilisateur autorisé dans le système de serveur d'accès (70) ;
- recevoir, dans l'unité de service d'accès (50) du système de serveur d'accès (70), en provenance du dispositif d'utilisateur mobile (6), la demande d'autorisation pour l'utilisateur, la demande d'autorisation comprenant un identifiant d'utilisateur, l'identifiant d'utilisateur correspondant au dispositif d'utilisateur mobile (6) ou à l'utilisateur du dispositif d'utilisateur mobile (6) ;
- recevoir, dans l'unité de service utilisateur (60) du système de serveur d'accès (70), en provenance du dispositif d'accès (5), un identifiant de dispositif d'accès, l'identifiant de dispositif d'accès correspondant au dispositif d'accès (5) ;
- déterminer, par le système de serveur d'accès (70), une autorisation de l'utilisateur en comparant l'identifiant d'utilisateur et le ou les identifiants d'utilisateur autorisé et en comparant l'identifiant de dispositif d'accès et le ou les identifiants de dispositif d'accès autorisé ; et
- si l'identifiant de dispositif d'accès correspond au ou aux identifiants de dispositif d'accès autorisé et si l'identifiant d'utilisateur correspond au ou aux identifiants d'utilisateur autorisé, générer, par le système de serveur d'accès (70), une entrée d'accès d'autorisation acceptée pour permettre un accès.

2. Procédé selon la revendication 1, **caractérisé en ce que** la réception, dans le dispositif d'accès (5), de l'entrée biométrique de l'utilisateur comprend les étapes consistant à :
- capturer, par le dispositif d'accès (5), l'entrée biométrique de l'utilisateur ; et
- générer, par le dispositif d'accès (5), une entrée biométrique numérique à partir de l'entrée biométrique de l'utilisateur, l'entrée biométrique numérique étant reçue, dans le dispositif d'utilisateur mobile (6), en tant qu'entrée biométrique de l'utilisateur ; ou
- capturer, par le capteur biométrique fourni en liaison avec le dispositif d'accès (5), l'entrée biométrique de l'utilisateur ; et
- générer, par le dispositif d'accès (5), une entrée biométrique numérique à partir de l'entrée biométrique de l'utilisateur, l'entrée biométrique numérique étant reçue, dans le dispositif d'utilisateur mobile (6), en tant qu'entrée biométrique de l'utilisateur.

3. Procédé selon la revendication 1 ou 2, **caractérisé en ce que** la détection, par le dispositif d'accès (5), du dispositif d'utilisateur mobile (6) à proximité du dispositif d'accès (5) comprend les étapes consistant à :
- établir, par le dispositif d'accès (5) ou par le dispositif d'accès (5) et le dispositif d'utilisateur mobile (6), une connexion de communication entre le dispositif d'accès (5) et le dispositif d'utilisateur mobile (6) ; ou
- détecter, par le dispositif d'accès (5), le dispositif d'utilisateur mobile (6) dans un réseau personnel à proximité du dispositif d'accès (5) ; et
- établir, par le dispositif d'accès (5), ou par le dispositif d'utilisateur mobile (6), ou par le dispositif d'accès (5) et le dispositif d'utilisateur mobile (6), une connexion de communication entre le dispositif d'accès (5) et le dispositif d'utilisateur mobile (6) dans le réseau personnel ; ou
- fournir, par un système de réseau personnel (80), un réseau personnel à proximité du dispositif d'accès (5), le dispositif d'accès (5) étant connecté au réseau personnel ;
- détecter, par le dispositif d'accès (5), le dispositif d'utilisateur mobile (6) dans le réseau personnel, le dispositif d'utilisateur mobile (6) étant connecté au réseau personnel fourni par le système de réseau personnel (80) ;
- établir, par le système de réseau personnel (80), une connexion de communication entre le dispositif d'accès (5) et le dispositif d'utilisateur mobile (6) ; ou
- fournir, par le dispositif d'accès (5), un réseau personnel à proximité du dispositif d'accès (5) ;
- détecter, par le dispositif d'accès (5), le dispositif d'utilisateur mobile (6) dans le réseau personnel, le dispositif d'utilisateur mobile (6) étant connecté au réseau personnel fourni par le dispositif d'accès (5),
- établir, par le dispositif d'accès (5) ou par le dispositif d'accès (5) et le dispositif d'utilisateur mobile (6), une connexion de communication entre le dispositif d'accès (5) et le dispositif d'utilisateur mobile (6).

4. Procédé selon la revendication 3, **caractérisé en ce que** le procédé comprend les étapes consistant à :
- établir, par le dispositif d'accès (5), ou par le dispositif d'utilisateur mobile (6), ou par le dispositif d'accès (5) et le dispositif d'utilisateur mobile (6), une connexion de communication personnelle sans fil entre le dispositif d'accès (5) et le dispositif d'utilisateur mobile (6) dans le réseau personnel ; ou
- établir, par le dispositif d'accès (5), ou par le dispositif d'utilisateur mobile (6), ou par le dispositif d'accès (5) et le dispositif d'utilisateur mobile (6), une connexion de communication Bluetooth, en champ proche, à ondes Z, infrarouge, entre le dispositif d'accès (5) et le dispositif d'utilisateur mobile (6) dans le réseau personnel ; ou
- fournir, par le système de réseau personnel (80), un réseau personnel sans fil ; ou
- fournir, par le système de réseau personnel (80), un réseau Wi-Fi ou Zigbee.

5. Procédé selon l'une quelconque des revendications 1 à 4, **caractérisé en ce que** le procédé comprend les étapes consistant à :
- fournir, dans le dispositif d'accès (5) ou dans l'unité de service d'accès (50) du système de serveur d'autorisation (70), une clé de chiffrement de dispositif d'utilisateur publique ;
- conserver, dans le dispositif d'utilisateur (6) ou dans l'unité de service d'utilisateur (60) du système de serveur d'autorisation (70), une clé de chiffrement de dispositif d'utilisateur privée chiffrée ;
- chiffrer, par le dispositif d'accès (5) ou par l'unité de service d'accès (50) du système de serveur d'autorisation (70), l'entrée biométrique de l'utilisateur avec la clé de chiffrement de dispositif d'utilisateur publique ;
- recevoir, dans le dispositif d'utilisateur mobile (6), l'entrée biométrique chiffrée ; et
- déchiffrer, dans le dispositif d'utilisateur mobile (6), l'entrée biométrique chiffrée en utilisant la clé de chiffrement de dispositif d'utilisateur privée chiffrée.

6. Procédé selon la revendication 5, **caractérisé en ce que** le procédé comprend les étapes consistant à :
- fournir, dans le dispositif d'utilisateur (6), une clé de chiffrement de dispositif d'accès publique ;
- conserver, dans le dispositif d'accès (5), une clé de chiffrement de dispositif d'accès privée chiffrée ;
- chiffrer, par le dispositif d'utilisateur (6), l'entrée d'accès ou l'entrée d'accès de vérification, ou l'entrée d'accès accepté, ou l'entrée d'accès refusé avec la clé de chiffrement de dispositif d'accès publique ;
- recevoir, dans le dispositif d'accès (5), l'entrée d'accès chiffrée ou l'entrée d'accès de vérification, ou l'entrée d'accès accepté, ou l'entrée d'accès refusé ; et
- déchiffrer, dans le dispositif d'accès (6), l'entrée d'accès chiffrée ou l'entrée d'accès de vérification, ou l'entrée d'accès accepté, ou l'entrée d'accès refusé en utilisant la clé de chiffrement de dispositif d'accès privée chiffrée.
